# EUROPÄISCHE PATENTSCHRIFT

(11) **EP 4 295 250 B1**
(45) Veröffentlichungstag und Bekanntmachung des Hinweises auf die Patenterteilung: **21.01.2026**
(21) Anmeldenummer: 22711160.6
(22) Anmeldetag: 17.02.2022
(51) Int. Cl.: G06F 21/31, H04W 12/04, H04W 12/069, G06F 21/33, H04L 9/32

(54) **INITIALISIEREN APPLIKATIONSSPEZIFISCHER KRYPTOGRAPHISCHER SICHERHEITSFUNKTIONEN**
INITIALIZING APPLICATION-SPECIFIC CRYPTOGRAPHIC SECURITY FUNCTIONS
INITIALISER LES FONCTIONS DE SÉCURITÉ CRYPTOGRAPHIQUES SPÉCIFIQUES À L'APPLICATION

(30) Priorität: 19.02.2021 DE 102021103993
(43) Veröffentlichungstag der Anmeldung: 27.12.2023
(73) Patentinhaber: Bundesdruckerei GmbH, 10969 Berlin (DE)
(72) Erfinder: DIETRICH, Frank, 12437 Berlin (DE); SCHWAN, Matthias, 13086 Berlin (DE)
(74) Vertreter: Richardt Patentanwälte PartG mbB
(86) Internationale Anmeldenummer: PCT/EP2022/053984
(87) Internationale Veröffentlichungsnummer: WO 2022/175400

(56) Entgegenhaltungen:
- EP-A1- 3 048 553
- EP-A1- 3 304 847
- US-A1- 2012 291 095

## Beschreibung

Die Erfindung betrifft ein Verfahren zum Initialisieren applikationsspezifischer kryptographischer Sicherheitsfunktionen für eine mobile Applikation auf einem mobilen Endgerät, ein entsprechendes mobiles Endgerät, sowie ein System, welches ein entsprechendes mobiles Endgerät und ein oder mehrere Server ein oder mehrerer Sicherheitsverwaltungsdienste zum Verwalten ein oder mehrerer Sicherheitselemente des mobilen Endgeräts umfasst.

Mobile Endgeräte, wie beispielsweise Smartphones, sind allgegenwärtig. Sie werden in vielen Lebensbereichen und Situationen zur Erfüllung verschiedenster Aufgaben im digitalen Bereich bzw. unter Zuhilfenahme digitaler Hilfsmittel verwendet. Dabei finden ein und dieselben mobile Endgeräte Verwendung sowohl in Bereichen mit niedrigen Sicherheitsanforderungen als auch in Bereichen mit hohen Sicherheitsanforderungen. Mithin müssen entsprechende mobile Endgeräte in der Lage sein auch solch hohen Sicherheitsanforderungen zu erfüllen. Die Sicherheit mobiler Endgeräte, wie Smartphones, ist daher zu einer relevanten Anforderung geworden für die Hersteller der Geräte, für die Hersteller der auf den Geräten installierten Programmen sowie Anbieter von Dienstleistungen, welche unter Verwendung der Geräte genutzt werden können. Aus Sicht von Herstellern von Programmen sowie Anbieter von Dienstleistungen gestaltet sich dabei insbesondere eine Implementierung eines einheitlich hohen Sicherheitsstandards für Geräte unterschiedlicher Hersteller schwierig.

Die EP 3 048 553 A1 beschreibt ein Verfahren und ein System sowie Einheiten zum Verteilen von Applets. Das Verfahren umfasst eine Zertifizierung eines Applets durch einen Stakeholder. Das Zertifizieren umfasst ein Übermitteln des Applets und einer Applet-Richtlinie durch einen Entwickler an den Stakeholder zur Zertifizierung, ein Erzeugen eines Applet-Schlüssels durch den Stakeholder, ein Zertifizieren des Applets und Speichern des Applet-Schlüssels und des zertifizierten Applets. Das Verfahren umfasst ferner ein Installieren des Applets in einer Sicherheitsumgebung, die mit einem Host verbindbar ist. Das Installieren des Applets umfasst ein Senden einer Sicherheitsumgebungskennung und einer Applet-Kennung durch den Host an den Stakeholder und Anfordern eines Tokens durch den Host vom Stakeholder, wobei das Token unter Verwendung eines Sicherheitsumgebungsschlüssels verschlüsselt ist und das verschlüsselte Token mindestens den Applet-Schlüssel umfasst, ein Empfangen des Tokens durch den Host, ein Senden des zertifizierten Applets und des Tokens an die Sicherheitsumgebung durch den Host und ein Installieren des zertifizierten Applets in der Sicherheitsumgebung durch die Sicherheitsumgebung unter Verwendung von aus dem Token extrahierten Informationen.

Die EP 3 304 847 A1 beschreibt ein Verfahren zum Verwalten eines sicheren Kanals zwischen einem Server und einem in einem ersten Gerät eingebetteten Sicherheitselement. Ein in einem zweiten Gerät eingebetteter Nutzeragent baut eine HTTPS-Sitzung mit dem Server auf und ruft eine Webanwendung von dem Server ab. Das Verfahren umfasst die Schritte eines Sendens eines Anwendungszertifikats an die Webanwendung, das mit bestimmten Daten verknüpft ist, die die Identität des Servers widerspiegeln, eines Erhaltens des Anwendungszertifikats und der spezifischen Daten durch das Sicherheitselement, eines Überprüfens der Gültigkeit des Anwendungszertifikats und einer konsistenten Verknüpfung des Anwendungszertifikats mit den spezifischen Daten durch das Sicherheitselement, sowie bei einer erfolgreichen Prüfung eines Generierens eines ephemeren Sitzungsschlüssels durch das Sicherheitselement und den Server und eines Verwenden des ephemeren Sitzungsschlüssels durch zum Öffnen eines sicheren Kanals.

Die US 2012/291095 A1 beschreibt einen unabhängigen Sicherheitselementmanager, welcher sichere Nutzlasten weiterleitet, ohne die sicheren Nutzlasten zu ändern und ohne Kenntnis von Verschlüsselungsschlüssel, die zum Verschlüsseln der sicheren Nutzlasten verwendet werden. Sichere Nutzlasten von mehreren Emittenten und mehreren TSMs können aufgrund der Kontrolle durch den Sicherheitselementmanager in einem oder mehreren Sicherheitselementen koexistieren.

Der Erfindung liegt die Aufgabe zugrunde, ein verbessertes Verfahren zum Initialisieren applikationsspezifischer kryptographischer Sicherheitsfunktionen zu schaffen.

Die der Erfindung zugrunde liegende Aufgabe wird jeweils mit den Merkmalen der unabhängigen Patentansprüche gelöst. Ausführungsformen der Erfindung sind in den abhängigen Patentansprüchen angegeben.

Ausführungsformen umfassen ein Verfahren zum Initialisieren applikationsspezifischer kryptographischer Sicherheitsfunktionen für eine mobile Applikation auf einem mobilen Endgerät. Das mobile Endgerät umfasst eine Mehrzahl von zum Bereitstellen der applikationsspezifischen kryptographischen Sicherheitsfunktionen für die mobile Applikation verwendbare Sicherheitselemente, welche jeweils von einem externen Sicherheitsverwaltungsdienst verwaltet werden. Auf dem mobilen Endgerät ist für jeden der externen Sicherheitsverwaltungsdienste der Mehrzahl von Sicherheitsverwaltungsdiensten jeweils ein lokales Sicherheitsverwaltungsprogrammmodul installiert.

Das Verfahren umfasst:
- Installieren der mobilen Applikation auf dem mobilen Endgerät,
- Ermitteln der auf dem mobilen Endgerät zur Verfügung stehenden und zum Bereitstellen der applikationsspezifischen kryptographischen Sicherheitsfunktionen für die mobile Applikation verwendbaren Mehrzahl von Sicherheitselementen und der die entsprechenden Sicherheitselemente jeweils verwaltenden Sicherheitsverwaltungsdienste durch die installierte Applikation,
- Auswahl zumindest eines Sicherheitselements aus der ermittelten Mehrzahl von Sicherheitselementen und des zumindest einen Sicherheitsverwaltungsdienstes, welcher das ausgewählte Sicherheitselement verwaltetet,
- Senden einer ersten Initialisierungsanfrage von der Applikation an das zumindest eine auf dem mobilen Endgerät installierte Sicherheitsverwaltungsprogrammmodul des ausgewählten Sicherheitsverwaltungsdienstes zum Implementieren der applikationsspezifischen kryptographischen Sicherheitsfunktionen für die Applikation in dem ausgewählten Sicherheitselement,
- Senden einer zweiten Initialisierungsanfrage von dem die erste Initialisierungsanfrage empfangenden Sicherheitsverwaltungsprogrammmodul über ein Netzwerk an einen Server des ausgewählten Sicherheitsverwaltungsdienstes zum Implementieren der applikationsspezifischen kryptographischen Sicherheitsfunktionen für die Applikation auf dem ausgewählten Sicherheitselement,
- Aufbau eines ersten verschlüsselten Kanals zwischen dem ausgewählten Sicherheitselement und dem Server des ausgewählten Sicherheitsverwaltungsdienstes unter Verwendung eines kryptographischen Schlüssels des Sicherheitsverwaltungsdienstes, wobei der kryptographische Schlüssel des Sicherheitsverwaltungsdienstes einen dem Sicherheitsverwaltungsdienst vorbehaltenen Schreibzugriff auf das von dem Sicherheitsverwaltungsdienst verwaltete Sicherheitselement nachweist,
- Installieren eines der Applikation zugeordneten applikationsspezifischen Applets in dem ausgewählten Sicherheitselement durch den Server des ausgewählten Sicherheitsverwaltungsdienstes über den verschlüsselten ersten Kanal, wobei das Applet die applikationsspezifischen kryptographischen Sicherheitsfunktionen für die Applikation bereitstellt,
- kryptographisches Koppeln der Applikation mit dem installierten Applet zum Freischalten einer Nutzung der von dem Applet bereitgestellten applikationsspezifischen kryptographischen Sicherheitsfunktionen für die Applikation.

Ausführungsformen können den Vorteil haben, dass auf dem mobilen Endgerät eine Mehrzahl von Sicherheitselementen zur Nutzung durch Applikation bereitgestellt werden kann. Insbesondere kann beispielsweise eine Mehrzahl von Sicherheitselementen bereitgestellt werden, welche sich nicht in der Verfügungshoheit eines Herstellers des mobilen Endgeräts befinden. Somit können beispielsweise über mobile Endgeräte unterschiedlicher Hersteller hinweg einheitliche Sicherheitsstandards implementiert werden.

Beispielsweise kann ein sicheres Implementieren von Sicherheitsfunktionen auf dem mobilen Endgerät zur Nutzung durch eine Applikation ermöglicht werden. Entsprechende Applikationen werden im Allgemeinen im Wirkbetrieb des mobilen Endgeräts installiert. Dabei befindet sich das mobile Endgerät im Verfügungsbereichs eines Nutzers und ist im Allgemeinen bereits Personalisiert, d.h. dem entsprechenden Nutzer zugeordnet. Das mobile Endgerät befindet sich somit nicht mehr in einer gesicherten Produktionsumgebung, d.h. Sicherheitsdomäne des Herstellers, welche ein Implementieren von Sicherheitsfunktionen durch den Hersteller unter Ausschluss und/oder Minimierung von Manipulationsmöglichkeiten seitens Dritter ermöglicht. Sollen unter diesen Voraussetzungen, d.h. im Wirkbetrieb, für eine Applikation Sicherheitsfunktionen in einer Weise bereitgestellt werden, so sollte dies in einer Weise erfolgen, dass Manipulationen effektiv verhindert werden können. Ausführungsformen können den Vorteil haben, dass ein sicheres Implementieren von Sicherheitsfunktionen auf dem mobilen Endgerät zur Nutzung durch eine Applikation im Wirkbetrieb ermöglicht wird.

Ferner kann für eine Applikation eine Auswahl von Sicherheitselementen bereitgestellt werden, aus welcher ausgewählt werden kann, welches Sicherheitselement verwendet werden soll. Es könne also nicht nur verschiedene Sicherheitselemente für verschiedene Applikationen bereitgestellt, sondern vielmehr mehrere verschiedene Sicherheitselemente für ein und dieselbe Applikation. Somit kann eine für die Applikation und/oder für die vorgesehene Verwendung der Applikation am besten geeignetes Sicherheitselement ausgewählt werden.

Beispielsweise können für ein und dieselbe Applikation durch Auswahl verschiedener Sicherheitselemente verschiede Sicherheitsniveaus, z.B. aufgrund von verschiedene kryptographische Sicherheitsfunktionen mit verschiedenen Sicherheitsniveaus, implementiert werden. Beispielsweise sind den für die Applikation verwendbaren verschiedenen Sicherheitselementen verschiedene Sicherheitsniveaus zugeordnet. Somit können mittels der Auswahl des oder der für die Applikation zu verwendenden Sicherheitselemente unterschiedliche Sicherheitsanforderungen für die Applikation erfüllt werden.

Sicherheitsanforderungen an eine Applikation können neben generisch Eigenschaften bzw. Verwendungszwecken von individuellen Verwendungszwecken der auf dem mobilen Endgerät installierten Instanz der Applikation abhängen. Beispielsweise kann es sich bei einer Applikation um eine digitale Ausweisapplikation zum Ausweisen und/oder Authentifizieren des Nutzers des mobilen Endgeräts oder um eine Onlinebanking-Applikation zum Ausführen von Banktransaktionen handeln, welche generischer Weise hohe Sicherheitsanforderungen erfüllen sollten. Hinsichtlich für eine Applikation zu erfüllende Sicherheitsanforderungen kann ferner der individuelle Verwendungszweck auf dem mobilen Endgerät relevant sein. So kann für eine Applikation beispielsweise höhere Sicherheitsanforderungen zu erfüllen sein, falls die Applikation im dienstlichen Umfeld auf einem dienstlichen Endgerät, wie etwa einem Diensthandy, installiert ist, im Vergleich zu einer Installation der Applikation für private Zwecke auf einem privaten mobilen Endgerät.

Zunächst wird auf dem mobilen Endgerät eine mobile Applikation installiert. Beispielsweise umfasst die mobile Applikation Definitionen, welche Anforderungen Sicherheitselemente erfüllen müssen, damit diese zum Bereitstellen applikationsspezifischer kryptographischer Sicherheitsfunktionen für die installierte mobile Applikation verwendet werden können bzw. dürfen. Die installierte Applikation prüft, welche Sicherheitselemente bzw. Sicherheitsverwaltungsdienste auf dem mobilen Endgerät zur Verfügung stehen und wählt aus diesen zumindest ein Sicherheitselement und zumindest einen das entsprechende Sicherheitselement verwaltende Sicherheitsverwaltungsdienst aus. Beispielsweise kann die installierte Applikation auch mehrere Sicherheitselemente und die zugehörigen Sicherheitsverwaltungsdienste auswählen. Eine Auswahl mehrerer Sicherheitselemente kann den Vorteil haben, dass beispielsweise Rückfallpositionen bereitgestellt werden können, falls Probleme mit einem Sicherheitselement bzw. einem Verwaltungsdienst auftreten.

Die Applikation sendet an die Sicherheitsverwaltungsprogrammmodule der ausgewählten Sicherheitsverwaltungsdienste jeweils eine Initialisierungsanfrage. Auf den Empfang der entsprechenden Initialisierungsanfragen senden die Sicherheitsverwaltungsprogrammmodule jeweils eine Initialisierungsanfrage über ein Netzwerk an Server der ihnen zugeordneten Sicherheitsverwaltungsdienste. In Antwort auf die entsprechende Initialisierungsanfragen der Sicherheitsverwaltungsprogrammmodule bauen die entsprechenden Server jeweils einen entsprechenden verschlüsselten Kanal zwischen dem Sicherheitsverwaltungsdienst und dem von dem entsprechenden Sicherheitsverwaltungsdienst verwalteten Sicherheitselement des mobilen Endgeräts auf. Hierzu verwenden die Sicherheitsverwaltungsdienste jeweils einen ihnen zugeordneten kryptographischen Schlüssel, mit welchem sie einen ihnen vorbehaltenen Schreibzugriff auf die Sicherheitselemente nachweisen. Mit anderen Worten haben lediglich die Sicherheitsverwaltungsdienste Schreibzugriffsrechte auf die Sicherheitselemente. Um eine Kopplung zwischen den ausgewählten Sicherheitselementen der auf dem mobilen Endgerät installierten Applikation herzustellen, installieren die Server der ausgewählten Sicherheitsverwaltungsdienste jeweils ein applikationsspezifisches Applet der entsprechenden Applikation in den von ihnen verwalteten Sicherheitselementen des mobilen Endgeräts. Hierzu verwenden sie beispielsweise die zuvor aufgebauten verschlüsselte Kanäle zu den Sicherheitselementen. Die installierten Applets stellen beispielsweise die applikationsspezifischen kryptographischen Sicherheitsfunktionen für die Applikation auf den Sicherheitselementen bereit. Schließlich erfolgt eine kryptographische Kopplung der Applikation mit jedem der installierten Applets. Durch die entsprechende kryptographische Kopplung wird eine Nutzung der von den Applets jeweils bereitgestellten applikationsspezifischen kryptographischen Sicherheitsfunktionen für die Applikation freigeschaltet.

Eine Authentifizierung bezeichnet eine Verifizierung einer behaupteten Eigenschaft einer Entität, wie etwa einem Nutzer des mobilen Endgeräts. Im Zuge einer Authentifizierung wird beispielsweise ein entsprechender von dem Nutzer erbrachter Nachweis verifiziert. Die Entität führt durch ihren Beitrag zur Authentifizierung, d.h. durch Bereitstellen entsprechender Nachweise wie Authentifizierungsdaten bzw. Authentifizierungsfaktoren zur Prüfung, eine Authentisierung durch.

Eine Authentifizierung des Nutzers bezüglich der behaupteten Eigenschaft der Authentizität, beispielsweise der Authentizität seiner Person bzw. Identität, erlaubt es dem authentifizierten Nutzer weitere Aktionen durchzuführen. Beispielsweise werden dem Nutzer Zugangsrechte eingeräumt. Ein erfolgreich authentifizierter Nutzer gilt als authentisch. Eine abschließende Bestätigung einer Authentifizierung kann eine Autorisierung umfassen.

Der Nutzer kann sich auf verschiedene Weisen authentisieren. Er kann beispielsweise einen Nachweis einer Kenntnis, wie einer PIN oder einem Passwort, vorlegen, einen Nachweis eines Besitzes, wie etwa eines kryptographischen Schlüssels, eines Zertifikats oder eines elektronischen Geräts, und/oder einen Nachweis von Eigenschaften seiner Person selbst, wie biometrische Merkmale oder Verhaltensmerkmale.

Unter einem mobilen Endgerät wird ein mobiles tragbares Kommunikationsgerät, wie beispielsweise ein Smartphone, ein Tablet oder eine Smartwatch verstanden.

Unter einem Authentifizierungssensor wird ein Sensor zum Erfassen von Authentifizierungsdaten des Nutzers des mobilen Endgeräts verstanden. Die Authentifizierungsdaten können beispielsweise biometrische Daten des Nutzers umfassen. Der Authentifizierungssensor kann zum Erfassen biometrischer Daten des Nutzers konfiguriert sein. Biometrische Daten können beispielsweise umfassen: Fingerabdruckdaten, Körpergeometriedaten/Anthropometriedaten, wie etwa Gesichts-, Hand-, Ohrgeometriedaten, Handlinienstrukturdaten, Venenstrukturdaten, wie etwa Handvenenstrukturdaten, Irisdaten, Retinadaten, Stimmerkennungsdaten, Nagelbettmuster. Die Authentifizierungsdaten können beispielsweise ein Wissen des Nutzers umfassen, wie eine PIN oder Passwort. Der Authentifizierungssensor kann eine Eingabevorrichtung zur Eingabe von Authentifizierungsdaten, wie etwa eine PIN oder ein Passwort umfassen. Die Eingabevorrichtung kann beispielsweise eine Tastatur und/oder einen Touchscreen umfassen.

Ein Challenge-Response-Verfahren stellt ein sicheres Authentifizierungsverfahren einer ersten Instanz gegenüber einer zweiten Instanz auf Basis von Wissen dar. Beispielsweise wird das erste Sicherheitselement durch das Sicherheitsapplet des zweiten Sicherheitselements unter Verwendung eines Challenge-Response-Verfahrens authentifiziert. Gleichzeitig stellt die Response eine Bestätigung einer erfolgreichen Nutzerauthentifizierung dar, falls die Response nur unter der Voraussetzung einer erfolgreichen Nutzerauthentifizierung durch das erste Sicherheitselement erzeugt wird. Somit weiß das Sicherheitsapplet, im Falle eines erfolgreichen Challenge-Response-Verfahrens nicht nur, dass die Nutzerauthentifizierung bestätigt wurde, sondern dass diese durch das erste Sicherheitselement bestätigt wurde und somit valide ist.

Im Zuge eines Challenge-Response-Verfahren stellt eine erste Instanz einer zweiten Instanz eine Aufgabe ("Challenge"), für welche die zweite Instanz eine korrekte Antwort ("Response") liefern muss. Durch das Bereitstellen der korrekten Antwort beweist die zweite Instanz, dass sie eine bestimmte Information, bei der es sich um ein gemeinsames Geheimnis ("Shared Secret") handelt, kennt. Vorteil ist dabei, dass das gemeinsame Geheimnis nicht mit übertragen wird und somit durch den Datenaustausch in Zuge des Challenge-Response-Verfahrens auch nicht kompromittiert werden kann.

Beispielsweise erzeugt die erste Instanz eine Zufallszahl ("Nonce") und sendet diese an die zweite Instanz. Die zweite Instanz verwendet das gemeinsame Geheimnis für eine kryptographische Transformation des Nonce und sendet das Resultat als Response zum Zwecke einer Authentifizierung der zweiten Instanz an die erste Instanz. Beispielsweise wird das Nonce mit dem gemeinsamen Geheimnis kombiniert und eine kryptographische Hashfunktion oder eine Verschlüsselung auf diese Kombination angewendet. Ferner kann das gemeinsame Geheimnis, etwa ein symmetrischer kryptographischer Schlüssel zum Verschlüsseln des Nonce verwendet werden. Die erste Instanz, welche sowohl das Nonce als auch das gemeinsame Geheimnis kennt kann beispielsweise dieselbe Berechnung wie die zweite Instanz ausführen und/oder eine Inverse Berechnung ausführen, z.B. das verschlüsselte Nonce unter Verwendung des gemeinsamen Geheimnisses wieder entschlüsseln. Stimmt das Ergebnis der Berechnung durch die erste Instanz mit dem Ergebnis der Berechnung der zweiten Instanz oder mit der Challenge überein, ist das Challenge-Response-Verfahren erfolgreich und die zweite Instanz erfolgreich authentifiziert. Ferner kann ein Challenge-Response-Verfahren auch auf einem asymmetrischen Kryptosystem beruhen und dem Nachweis eines Besitzes eines privaten und damit geheimen kryptographischen Schlüssels durch die zweite Instanz gegenüber der ersten Instanz dienen. Dabei kennt nur die zweite Instanz den entsprechenden privaten kryptographischen Schlüssel, welchen sie für eine kryptographische Transformation der Challenge, e.g. eines Nonce, verwendet. Bei der entsprechenden kryptographischen Transformation kann es sich beispielsweise um ein digitales Signieren handeln. Die erste Instanz kann unter Verwendung eines dem privaten kryptographischen Schlüssel zugehörigen öffentlichen kryptographischen Schlüssels anhand der Response prüfen, ob die zweite Instanz tatsächlich über Kenntnis des privaten kryptographischen Schlüssels verfügt, ohne dass die erste Instanz im Zuge der Prüfung selbst Kenntnis von dem privaten kryptographischen Schlüssel erlangt.

Unter einem Sicherheitselement, auch "Secure Element" oder "SE" genannt, wird ein gesichertes Element eines mobilen Endgeräts verstanden, welches kryptographische Mittel bereitstellt. Diese kryptographischen Mittel sind gegen Manipulation geschützt und beispielsweise über kryptographische Schlüssel nur für autorisierte Dienste und Anwendungen zugänglich. Insbesondere können die kryptographischen Mittel beispielsweise nur durch autorisierte Dienste und Anwendungen in das Sicherheitselement eingebracht, ergänzt, verändert und/oder gelöscht werden. Ein Sicherheitselement bietet mithin eine manipulationssichere Plattform, beispielsweise implementiert in Form eines sicheren Ein-Chip-Mikrocontroller, auf welcher Applets und/oder vertrauliche und/oder kryptographische Daten gemäß vordefinierten Regeln und Sicherheitsanforderungen von zuverlässig identifizierten vertrauenswürdigen Instanzen gespeichert und so berechtigten Anwendungsprogrammen und/oder Betriebssystemen zur Verfügung gestellt werden können. Ein Sicherheitselement kann eingebettete oder integriert sein, beispielsweise zerstörungsfrei lösbar oder fest verbunden, d.h. nicht zerstörungsfrei lösbar, eingebracht sein. Das Sicherheitselement kann beispielweise eine SIM, UICC, SmartMicroSD, Smartcard, eSE, eSIM oder eUICC umfassen. Beispielsweise sind auf einem Sicherheitselement kryptographische Schlüssel gespeichert, d.h. das Sicherheitselement umfasst einen Datentresor für kryptographische Schlüssel bzw. einen "Key Store". Ein solcher Key-Store bzw. Sicherheitselement kann auch als Teil des Hauptprozessors implementiert sein, beispielsweise in einer TEE (Trusted Excecution Environment). Beispielsweise kann das erste Sicherheitselement unter Verwendung einer TEE implementiert sein. Sicherheitselemente sind beispielsweise als Hardware und/oder Firmware implementiert. Nach Ausführungsformen können Sicherheitselemente bzw. Key Stores auch als Software implementiert sein. Zwei Sicherheitselemente sind beispielsweise unabhängig voneinander, wenn es keine gemeinsame Instanz gibt, welche zugriffsberechtigt für beide Sicherheitselemente ist.

Ein Anwendungsprogramm, auch Applikation oder kurz App genannt, bezeichnet ein Computerprogramm, welches nicht systemtechnische Funktionalität bereitstellt, unterstützt und/oder deren Bearbeitung ermöglicht.

Unter einem Applet wird ein Computerprogramm verstanden, welches nicht als eigenständige Anwendungsprogramm betrieben wird. Der Begriff "Applet" setzt sich aus den englischen Worten "Application", d.h. Anwendung bzw. Anwendungsprogramm und "Snippet", d.h. Schnipsel, zusammen.

Ein Betriebssystem bezeichnet ein Computerprogramm oder eine Zusammenstellung von Computerprogrammen, welche systemtechnische Funktionalitäten bereitstellen, unterstützen und/oder deren Bearbeitung ermöglichen. Durch ein Betriebssystem werden Systemressourcen zur Verfügung gestellt. Systemressourcen bezeichnen Systemelemente bzw. Hardwarekomponenten eines Computers, die von Prozessen zur korrekten Ausführung benötigt werden.

Bei einem Computer bzw. einem Computersystem kann es sich zum Beispiel um einen stationären Computer, wie etwa einen Personal Computer (PC), Serviceterminal oder einen Server, oder um einen mobilen tragbaren Computer, wie etwa einen Laptop, ein Tablet, ein Smartphone oder einem anderen Smart Device, handeln. Der Computer kann eine Schnittstelle zur Verbindung mit dem Netzwerk umfassen, wobei es sich bei dem Netzwerk um ein privates oder öffentliches Netzwerk handeln kann, insbesondere das Internet. Je nach Ausführungsform kann diese Verbindung auch über ein Mobilfunknetz hergestellt werden.

Unter einem "Nutzer-Computersystem" wird hier ein Computersystem verstanden, auf welches der Nutzer Zugriff hat. Hierbei kann es sich zum Beispiel um eine Desktop-Computer (PC), ein Serviceterminal, oder ein mobiles tragbares Kommunikationsgerät, wie etwa ein Laptop, ein Tablet, ein Smartphone oder einem anderen Smart Device handeln.

Unter einem "Dienst-Server" wird hier ein Server bzw. ein Computersystem verstanden, auf welchem ein Serverprogramm ausgeführt wird und das die Möglichkeit bereitstellt einen angebotenen Dienst über ein Netzwerk zu initiieren bzw. in Anspruch zu nehmen und/oder auszuführen.

Unter einem "Programm" bzw. "Programminstruktionen" wird hier ohne Einschränkung jede Art von Computerprogramm verstanden, welches maschinenlesbare Instruktionen zur Steuerung einer Funktionalität des Computers umfasst.

Unter einem "Prozessor" wird hier und im Folgenden eine Logikschaltung verstanden, die zur Ausführung von Programminstruktionen dient. Die Logikschaltung kann auf einem oder mehreren diskreten Bauelementen implementiert sein, insbesondere auf einem Chip. Insbesondere wird unter einem "Prozessor" ein Mikroprozessor oder ein Mikroprozessorsystem aus mehreren Prozessorkernen und/oder mehreren Mikroprozessoren verstanden.

Unter einem "Speicher" werden hier sowohl flüchtige als auch nicht flüchtige elektronische Speicher bzw. digitale Speichermedien verstanden.

Unter einem "nichtflüchtigen Speicher" wird hier ein elektronischer Speicher zur dauerhaften Speicherung von Daten, insbesondere von statischen kryptographischen Schlüsseln, Attributen oder Kennungen, verstanden. Ein nichtflüchtiger Speicher kann als nichtänderbarer Speicher konfiguriert sein, der auch als Read-Only Memory (ROM) bezeichnet wird, oder als änderbarer Speicher, der auch als Non-Volatile Memory (NVM) bezeichnet wird. Insbesondere kann es sich hierbei um ein EEPROM, beispielsweise ein Flash-EEPROM, kurz als Flash bezeichnet, handeln. Ein nichtflüchtiger Speicher zeichnet sich dadurch aus, dass die darauf gespeicherten Daten auch nach Abschalten der Energieversorgung erhalten bleiben.

Unter einer "Schnittstelle" bzw. "Kommunikationsschnittstelle" wird hier eine Schnittstelle verstanden, über die Daten empfangen und gesendet werden können, wobei die Kommunikationsschnittstelle kontaktbehaftet oder kontaktlos konfiguriert sein kann. Eine Kommunikationsschnittstelle kann beispielsweise eine Kommunikation über ein Netzwerk ermöglichen. Je nach Konfiguration kann eine Kommunikationsschnittstelle beispielsweise eine kabellose Kommunikation nach einem Mobilfunkstandard, Bluetooth-, RFID-, WiFi und/oder NFC-Standard bereitstellen. Je nach Konfiguration kann eine Kommunikationsschnittstelle beispielsweise eine kabelbasierte Kommunikation bereitstellen. Bei der Kommunikationsschnittstelle kann es sich um eine interne Schnittstelle oder um eine externe Schnittstelle handeln.

Bei den verschlüsselten Kommunikationskanälen handelt es sich beispielsweise um verschlüsselten Ende-zu-Ende-Verbindung. Unter einer "verschlüsselten Ende-zu-Ende-Verbindung" bzw. einem "verschlüsselten Ende-zu-Ende-Übertragungskanal" wird hier eine Verbindung zwischen einem Sender und einem Empfänger mit einer Ende-zu-Ende-Verschlüsslung verstanden, bei der zu übertragende Daten vom Sender verschlüsselt und erst vom Empfänger wieder entschlüsselt werden. Die Verschlüsselung übertragener Daten erfolgt somit über alle Übertragungsstationen hinweg, sodass Zwischenstationen aufgrund der Verschlüsslung keine Kenntnis vom Inhalt der übertragenen Daten erlagen können. Die Verbindung wird durch die Verschlüsselung kryptographisch abgesichert, um ein Ausspähen und/oder eine Manipulation der Übertragung zu verhindern, wobei hierzu ein sogenanntes Secure-Messaging-Verfahren eingesetzt werden kann. Eine Ende-zu-Ende-Verschlüsslung beruht beispielsweise auf zwei symmetrischen kryptographischen Schlüsseln, wobei ein erster der symmetrischen Schlüssel zum Verschlüsseln von Nachrichten und ein zweiter der symmetrischen Schlüssel zum Authentifizieren des Senders der Nachricht, etwa mittels Message Authentication Code (MAC)-Algorithmen, dient. Beispielsweise werden für einen verschlüsselten Kommunikationskanal im Zuge des Aufbaus ephemere Schlüssel zur Verschlüsselung ausgehandelt, welche mit einer Beendigung des Kommunikationskanals ihre Gültigkeit verlieren. Eine Verwendung unterschiedlicher ephemerer Schlüssel für unterschiedliche Kommunikationskanäle ermöglicht es eine Mehrzahl von Kommunikationskanälen parallel zueinander zu betreiben.

Ein verschlüsselter Kommunikationskanal kann beispielsweise unter Verwendung des Transport Layer Security (TLS) Protokolls aufgebaut werden, beispielsweise als Teil des Hypertext Transfer Protocol Secure (HTTP) Protokolls.

Asymmetrische Schlüsselpaare werden für eine Vielzahl von Kryptosystemen eingesetzt und spielen bei der sicheren Übertragung elektronischer Daten eine wichtige Rolle. Ein asymmetrisches Schlüsselpaar besteht aus einem öffentlichen Schlüssel, welcher zur Ver- und/oder Entschlüsselung von Daten verwendet wird und an Dritte, beispielsweise an einen Sender oder Empfänger von Daten, weitergegeben werden darf, sowie einem privaten Schlüssel, welcher zur Ver- und/oder Entschlüsselung aber auch zur Signatur von Daten verwendet wird und im Regelfall geheim gehalten werden muss. Der öffentliche Schlüssel ermöglicht es jedermann Daten für den Inhaber des privaten Schlüssels zu verschlüsseln oder mit dem privaten Schlüssel erstellte digitale Signaturen zu prüfen. Ein privater Schlüssel ermöglicht es seinem Inhaber mit dem öffentlichen Schlüssel verschlüsselte Daten zu entschlüsseln oder digitale Signaturen von Daten zu erstellen.

Eine digitale Signatur von Daten umfasst beispielsweise ein Bilden eines Prüfwerts der Daten, wie etwa eines Hashwerts, welcher mit einem als Signaturschlüssel verwendeten privaten kryptographischen Schlüssel eines asymmetrischen Schlüsselpaars verschlüsselt wird. Im Falle einer Signatur kennt nur der Signierende den zum Erstellen der Signatur verwendeten privaten kryptographischen Schlüssel, d.h. Signaturschlüssel, des für die Signatur verwendeten asymmetrischen Schlüsselpaars. Der Signaturempfänger verfügt lediglich über den öffentlichen Schlüssel, d.h. Signaturprüfschlüssel, des für die Signatur verwendeten asymmetrischen Schlüsselpaars. Der Signaturempfänger kann die Signatur mithin prüfen, aber nicht selbst berechnen. Für eine Signaturprüfung berechnet der Signaturempfänger beispielsweise den Prüfwert der signierten Daten und vergleicht diesen mit dem Ergebnis einer Entschlüsselung der Signatur unter Verwendung des Signaturprüfschlüssels. Stimmt der berechnet Hashwert mit dem Ergebnis der Entschlüsselung überein ist die Signatur korrekt. Wird zudem die Authentizität des Signaturprüfschlüssels, etwa durch ein Zertifikat, insbesondere ein PKI-Zertifikat, bestätigt, ist die Signatur valide.

Unter einem "Zertifikat" wird hier ein digitales Zertifikat verstanden, welches auch als Public-Key-Zertifikat (PKI-Zertifikat) bezeichnet wird. Bei einem Zertifikat handelt es sich um strukturierte Daten, die dazu dienen, einen öffentlichen Schlüssel eines asymmetrischen Kryptosystems einer Identität, wie zum Beispiel einer Person, Institution oder einer Vorrichtung, zuzuordnen. Zur kryptographischen Sicherung und zum Nachweis der Authentizität der Daten des Zertifikates, sind diese von einem Zertifikatsaussteller signiert. Durch PKI-Zertifikate, welche auf asymmetrischen Schlüsselpaaren basieren, und bis auf ein Root- bzw. Wurzelzertifikat jeweils von einem Zertifikatsaussteller mit einem Signaturschlüssel signiert sind, dessen zugehöriger Signaturprüfschlüssel dem Zertifikatsaussteller durch ein PKI-Zertifikat des entsprechenden Zertifikataussteller zugeordnet ist, wird eine so genannte Public Key Infrastructure (PKI) realisiert. Beispielsweise kann das Zertifikat dem Standard X.509 oder einem anderen Standard entsprechen. Beispielsweise handelt es sich bei dem Zertifikat um ein Card Verifiable Certificate (CVC). Ein Berechtigungszertifikat umfasst strukturierte Daten, welche zusätzlich Rechte der Identität definieren.

Die PKI stellt ein System zum Ausstellen, Verteilen und Prüfen digitaler Zertifikate bereit. Ein digitales Zertifikat kann in einem asymmetrischen Kryptosystem die Authentizität eines öffentlichen kryptographischen Schlüssels und seinen zulässigen Anwendungs- und Geltungsbereich bestätigen. Das digitale Zertifikat ist selbst durch eine digitale Signatur geschützt, deren Echtheit bzw. Authentizität mit dem öffentlichen Schlüssel des Ausstellers des Zertifikates geprüft werden kann. Um die Authentizität des Ausstellerschlüssels zu prüfen, wird wiederum ein digitales Zertifikat verwendet. Auf diese Weise lässt sich eine Kette von digitalen Zertifikaten aufbauen, die jeweils die Authentizität des öffentlichen Schlüssels bestätigen, mit dem das vorhergehende Zertifikat geprüft werden kann. Eine solche Kette von Zertifikaten bildet einen sogenannten Validierungspfad oder Zertifizierungspfad. Auf die Echtheit des letzten Zertifikats, des sogenannten Wurzelzertifikats, und des dadurch zertifizierten Schlüssels, müssen sich die Teilnehmer der PKI beispielsweise ohne ein weiteres Zertifikat verlassen können. Das Wurzelzertifikat wird von einer sogenannten Wurzelzertifizierungsinstanz verwaltet, auf deren als gesichert vorausgesetzten Authentizität die Authentizität aller Zertifikate der PKI zurückgeht.

Digitale Zertifikate werden beispielsweise durch eine unabhängige, glaubwürdige Instanz (Zertifizierungsdienstanbieter/ZDA oder Vertrauensdienstanbieter/VDA), d.h. die das Zertifikat zuteilende Zertifizierungsstelle, bestätigen. Zertifikate können einem breiten Personenkreis zur Verfügung gestellt werden, um diesem eine Prüfung elektronischer Signaturen auf Authentizität und Gültigkeit zu ermöglichen. Ein Zertifikat kann einer elektronischen Signatur zugeordnet sein und einen Signaturprüfschlüssel in Form des öffentlichen Schlüssels bereitstellen, wenn der zu dem Signaturprüfschlüssel gehörende private Schlüssel als Signaturschlüssel verwendet wurde. Dadurch, dass ein ZDA /VDA ein Zertifikat in Assoziation mit einem öffentlichen Schlüssel der Allgemeinheit zur Verfügung stellt, ermöglicht sie es den Nutzern asymmetrischer Kryptosysteme den öffentlichen Schlüssel einer Identität, beispielsweise einer Person, einer Organisation, oder Computersystem, zuzuordnen.

Nach Ausführungsformen kann die elektronische Identität eine offiziell anerkannte Identität, wie zum Beispiel eine auf Grundlage eines offiziellen Ausweisdokuments, etwa eines Personalausweises oder Reisepasses, erstellte elektronische Identität umfassen.

Die elektronische Identität eines Nutzers ist eindeutig, d.h. einzigartig und unverwechselbar. Sie wird auf der Grundlage von Merkmalen, sog. Identitätsattributen, definiert. Eine elektronische Identität umfasst beispielsweise personenbezogenen Daten. Personenbezogene Daten bezeichnen Daten, welche eine Identifikation einer Person ermöglichen oder einer Person zuordenbar sind, auf welche die personenbezogenen Daten bezogen sind.

Ein Nutzer kann über eine Mehrzahl von unterschiedlichen, anwendungsspezifischen elektronischen Identitäten verfügen. Diese elektronischen Identitäten können unterschiedlichen Sicherheitsanforderungen entsprechen.

Nach Ausführungsformen kann eine auf dem mobilen Endgerät gespeicherte und von der ID-Anwendungsprogramm bereitgestellte bzw. verwaltete elektronische Identität ohne zusätzliche Hardware neben dem mobilen Endgerät zur Identifizierung und Authentifizierung des Nutzers des mobilen Endgeräts verwendet werden.

Identitätsattribute werden beispielsweise von Service-Providern bzw. Dienstanbietern für Online-Dienst nachgefragt. Nach Ausführungsformen erfolgt eine Übertragung der von einem Dienstanbieter für seinen Online-Dienst benötigten Identitätsattribute verschlüsselt und authentisch. Beispielsweise wird unter Verwendung von Berechtigungszertifikaten geregelt, wer auf welche Identitätsattribute zugreifen darf bzw. eine Leseberechtigung für diese besitzt. Beispielsweise werden die benötigten Identitätsattribute von einem dazu mittels Berechtigungszertifikat berechtigten ID-Provider ausgelesen und dem anfragenden Dienstanbieter zur Verfügung gestellt. Nach Ausführungsformen stellt der ID-Provider dem anfragenden Dienstanbieter nur eine Bestätigung des oder der angefragten Identitätsattribute zur Verfügung.

Eine Zustimmung des Nutzers zur Verwendung der Identitätsattribute und/oder eine Nutzerauthentifizierung erfolgt beispielsweise unter Prüfung ein oder mehrerer Authentifizierungsfaktoren, wie etwa Passwort, PIN, Fingerabdruck oder Gesichtserkennung.

Nach Ausführungsformen werden mehrere Sicherheitselementen aus der ermittelten Mehrzahl von Sicherheitselementen und die jeweils zugeordneten Sicherheitsverwaltungsdienste, welche die mehreren ausgewählten Sicherheitselemente verwalteten, ausgewählt.

Ausführungsformen können den Vorteil haben, dass eine Mehrzahl von Sicherheitselementen für das Initialisieren applikationsspezifischer kryptographischer Sicherheitsfunktionen der Applikation verwendet werden können. Dies kann beispielsweise den Vorteil haben, dass Rückfallpositionen bereitgestellt werden, falls Probleme mit einem der Sicherheitselemente auftreten.

Nach Ausführungsformen werden die mehreren ausgewählten Sicherheitselementen jeweils von demselben Sicherheitsverwaltungsdienst verwaltet.

Nach Ausführungsformen wird zumindest ein Teil der mehreren ausgewählten Sicherheitselementen von unterschiedlichen Sicherheitsverwaltungsdiensten verwaltet.

Nach Ausführungsformen werden alle ausgewählten Sicherheitselementen von jeweils unterschiedlichen Sicherheitsverwaltungsdiensten verwaltet.

Nach Ausführungsformen werden erste Initialisierungsanfragen für alle ausgewählten Sicherheitselemente von der Applikation jeweils an das Sicherheitsverwaltungsprogrammmodul jedes ausgewählten Sicherheitsverwaltungsdienstes gesendet zum Implementieren der applikationsspezifischen kryptographischen Sicherheitsfunktionen für die Applikation in dem jeweiligen ausgewählten Sicherheitselement. Zweite Initialisierungsanfragen werden von den entsprechenden Sicherheitsverwaltungsprogrammmodulen der ausgewählten Sicherheitsverwaltungsdienste über ein Netzwerk an Server des ausgewählten Sicherheitsverwaltungsdienste gesendet. Zwischen jedem der ausgewählten Sicherheitselemente und dem Server des jeweiligen Sicherheitsverwaltungsdienstes, welcher das entsprechende ausgewählte Sicherheitselemente verwalteten, wird jeweils unter Verwendung eines kryptographischen Schlüssels des entsprechenden Sicherheitsverwaltungsdienst ein erster verschlüsselter Kanal aufgebaut und über den entsprechenden Kanal ein der Applikation zugeordnetes applikationsspezifisches Applets in dem entsprechenden ausgewählten Sicherheitselement durch den Server des entsprechenden Sicherheitsverwaltungsdienstes installiert. Die Applikation wird mit jedem der installierten Applets jeweils kryptographisch gekoppelt zum Freischalten einer Nutzung der von dem entsprechenden Applet bereitgestellten applikationsspezifischen kryptographischen Sicherheitsfunktionen für die Applikation.

Ein Zusammenfassen der Initialisierungsanfragen durch die Applikation kann den Vorteil haben, dass eine effizientere Kommunikation implementiert werden kann.

Nach Ausführungsformen werden die ersten Initialisierungsanfragen für Sicherheitselemente, welche von demselben Sicherheitsverwaltungsdienst verwaltete werden, von der Applikation zusammengefasst und an das dem entsprechenden Sicherheitsverwaltungsdienst zugeordnete Sicherheitsverwaltungsprogrammmodul gesendet.

Nach Ausführungsformen werden die ersten Initialisierungsanfragen für Sicherheitselemente, welche von demselben Sicherheitsverwaltungsdienst verwaltete werden, jeweils einzeln von der Applikation an das dem entsprechenden Sicherheitsverwaltungsdienst zugeordnete Sicherheitsverwaltungsprogrammmodul gesendet.

Nach Ausführungsformen werden die zweiten Initialisierungsanfragen für Sicherheitselemente, welche von demselben Sicherheitsverwaltungsdienst verwaltete werden, von dem Sicherheitsverwaltungsprogrammmodul des entsprechenden Sicherheitsverwaltungsdienstes zusammengefasst und an den entsprechenden Sicherheitsverwaltungsdienst gesendet.

Ein Zusammenfassen der Initialisierungsanfragen durch das Sicherheitsverwaltungsprogrammmodul kann den Vorteil haben, dass eine effizientere Kommunikation zwischen dem Sicherheitsverwaltungsprogrammmodul und dem Sicherheitsverwaltungsdienst implementiert werden kann.

Nach Ausführungsformen werden die zweiten Initialisierungsanfragen für Sicherheitselemente, welche von demselben Sicherheitsverwaltungsdienst verwaltete werden, jeweils einzeln von dem Sicherheitsverwaltungsprogrammmodul des entsprechenden Sicherheitsverwaltungsdienstes an den entsprechenden Sicherheitsverwaltungsdienst gesendet.

Falls festgestellt wird, dass für ein oder mehrere der ausgewählten Sicherheitselemente des Endgeräts keine Sicherheitsverwaltungsprogrammmodule des oder der die entsprechenden Sicherheitselemente verwaltenden Sicherheitsverwaltungsdienste auf dem Sicherheitselement installiert sind, werden nach Ausführungsformen das oder die entsprechenden Sicherheitsverwaltungsprogrammmodul auf dem mobilen Endgerät installiert.

Ausführungsformen können den Vorteil haben, dass Sicherheitsverwaltungsprogrammmodule für die ausgewählten Sicherheitselemente, soweit erforderlich, nachträglich installiert werden können. Somit kann sichergestellt werden, dass für alle ausgewählten Sicherheitselemente jeweils Sicherheitsverwaltungsprogrammmodule auf dem mobilen Endgerät zur Verfügung stehen.

Falls festgestellt wird, dass für ein oder mehrere der Sicherheitselemente des Endgeräts keine Sicherheitsverwaltungsprogrammmodule des oder der die entsprechenden Sicherheitselemente verwaltenden Sicherheitsverwaltungsdienste auf dem Sicherheitselement installiert sind, werden nach Ausführungsformen das oder die entsprechenden Sicherheitsverwaltungsprogrammmodul auf dem mobilen Endgerät installiert.

Ausführungsformen können den Vorteil haben, dass Sicherheitsverwaltungsprogrammmodule für die ausgewählten Sicherheitselemente, soweit erforderlich, nachträglich installiert werden können. Somit kann sichergestellt werden, dass für alle ausgewählten Sicherheitselemente jeweils Sicherheitsverwaltungsprogrammmodule auf dem mobilen Endgerät zur Verfügung stehen.

Nach Ausführungsformen erfolgt die Auswahl der ein oder mehreren Sicherheitselemente und Sicherheitsverwaltungsdienste, welche die entsprechenden Sicherheitselemente verwalteten, unter Verwendung einer vordefinierten Zusammenstellung von mit der Applikation kompatiblen Kombinationen aus Sicherheitselementen und zugehörigen Sicherheitsverwaltungsdiensten, welche über der Applikation zugeordnete applikationsspezifische Applets zum Installieren in dem entsprechenden Sicherheitselement verfügen.

Ausführungsformen können den Vorteil haben, dass für die Auswahl der Sicherheitselemente und Sicherheitsverwaltungsdienste eine vordefinierte Zusammenstellung zur Verfügung gestellt werden kann. Anhand der vordefinierten Zusammenstellung können kompatible Kombinationen von Sicherheitselementen zugehörigen Sicherheitsverwaltungsdiensten identifiziert werden. Beispielsweise umfasst die Applikation die entsprechend vordefinierte Zusammenstellung.

Nach Ausführungsformen wird die Zusammenstellung in Form einer Liste von Kombinationen aus jeweils einem Sicherheitselement und einem das entsprechende Sicherheitselement verwaltenden Sicherheitsverwaltungsdienst bereitgestellt.

Nach Ausführungsformen umfasst die Auswahl der ein oder mehreren Sicherheitselemente und Sicherheitsverwaltungsdienste ferner:
- Ausgeben der ermittelten Sicherheitselemente und Sicherheitsverwaltungsdienste, welche gemäß der vordefinierten Zusammenstellung kompatibel sind, auf einer Anzeigevorrichtung des Endgeräts,
- Empfang einer Nutzereingabe mit der Auswahl über eine Eingabevorrichtung des Endgeräts, wobei die Auswahl ein oder mehreren Sicherheitselemente und Sicherheitsverwaltungsdienste aus den ausgebenden Sicherheitselemente und Sicherheitsverwaltungsdienste auswählt.

Ausführungsformen können den Vorteil haben, dass dem Nutzer die Möglichkeit gegeben werden kann, die Auswahl der zu verwendenden Sicherheitselemente und Sicherheitsverwaltungsdienste zu tätigen und/oder eine vorgeschlagene Auswahl zu bestätigen. Beispielsweise werden die ermittelten Sicherheitselemente und Sicherheitsverwaltungsdienste auf einem Display des Endgeräts angezeigt. Die entsprechende Anzeige kann der Nutzer beispielsweise bestätigen. Beispielsweise werden dem Nutzer Auswahlmöglichkeiten zur Auswahl ein oder mehrerer der auf der Anzeigevorrichtung ausgegebenen Sicherheitselemente und Sicherheitsverwaltungsdienste zur Verfügung gestellt. Unter Verwendung der entsprechenden Auswahlmittel kann der Nutzer die vom ihm gewünschten Sicherheitselemente und Sicherheitsverwaltungsdienste auswählen.

Nach Ausführungsformen erfolgt die Zusammenstellung einer Rangfolge für die Kombinationen von kompatiblen Sicherheitselemente und Sicherheitsverwaltungsdienste definiert und die Auswahl unter Berücksichtigung der entsprechenden Rangfolge.

Ausführungsformen können den Vorteil haben, dass durch die vordefinierte Zusammenstellung Präferenzen bei der Auswahl der Sicherheitselemente und Sicherheitsverwaltungsdienste implementiert werden können.

Nach Ausführungsformen wird die Zusammenstellung in Form einer Liste bereitgestellt, welche für jede der von ihr umfassten Kombination aus Sicherheitselement und Sicherheitsverwaltungsdienst einen Rang definiert.

Nach Ausführungsformen umfasst die Auswahl zumindest die ermittelte Kombination von kompatiblem Sicherheitselement und Sicherheitsverwaltungsdienst, welcher von den ermittelten Kombinationen der höchste Rang gemäß der Rangfolge zugeordnet ist.

Ausführungsformen können den Vorteil haben, dass sichergestellt werden kann, dass Sicherheitselemente und Sicherheitsverwaltungsdienste, welche ein vordefiniertes Kriterium erfüllen bzw. dessen Erfüllen mit Sicherheit ausgewählt werden.

Nach Ausführungsformen umfasst die Auswahl eine vordefinierte Anzahl von ermittelten Kombinationen von kompatiblen Sicherheitselementen und Sicherheitsverwaltungsdiensten, welchen von den ermittelten Kombinationen die höchsten Ränge der Rangfolge zugeordnet sind.

Ausführungsformen können den Vorteil haben, dass sichergestellt werden kann, dass die ermittelten Kombinationen mit den höchsten Rängen ausgewählt werden.

Nach Ausführungsformen umfasst das Verfahren ferner:
- Ausgeben der ermittelten Sicherheitselemente und Sicherheitsverwaltungsdienste, welche gemäß der vordefinierten Zusammenstellung kompatibel sind, auf einer Anzeigevorrichtung des Endgeräts, wobei die Ausgabe die Auswahl zur Prüfung durch einen Nutzer anzeigt,
- auf einen Empfang einer Nutzereingabe mit einer Bestätigung der Auswahl hin, Verwenden der Auswahl,
- auf einen Empfang einer Nutzereingabe mit einer Änderung der Auswahl hin, Verwenden der geänderten Auswahl.

Ausführungsformen können den Vorteil haben, dass dem Nutzer die Möglichkeit gegeben wird, eine vorgegebene Auswahl entweder zu bestätigen oder aber Änderungen an der Auswahl vorzunehmen. Bei einer Bestätigung wird die vorgegebene Auswahl verwendet, bei Änderungen wird die geänderte Auswahl verwendet.

Nach Ausführungsformen umfasst die Änderung ein Streichen ein oder mehrerer ausgewählter Kombinationen oder ein hinzufügen ein oder mehrerer der ermittelten Kombinationen zu der Auswahl.

Nach Ausführungsformen umfasst die Auswahl obligatorisch die ermittelte Kombination von kompatiblem Sicherheitselement und Sicherheitsverwaltungsdienst, welcher von den ermittelten Kombinationen der höchste Rang gemäß der Rangfolge zugeordnet ist.

Nach Ausführungsformen umfasst die Auswahl obligatorisch die ermittelte Kombination von kompatiblem Sicherheitselement und Sicherheitsverwaltungsdienst, welcher von den ermittelten Kombinationen der höchste Rang gemäß der Rangfolge zugeordnet ist, unabhängig von der Nutzereingabe.

Nach Ausführungsformen umfasst die Auswahl obligatorisch zumindest zwei Sicherheitselemente, welche von zwei unterschiedliche Sicherheitsverwaltungsdienste verwaltet werden, und/oder zumindest zwei Sicherheitselemente, welche von demselben Sicherheitsverwaltungsdienst verwaltet werden.

Ausführungsformen können den Vorteil haben, dass sichergestellt werden kann, dass unterschiedliche Sicherheitsverwaltungsdienste verwendet werden. Falls einer der Sicherheitsverwaltungsdienste ausfällt, kann somit sichergestellt werden, dass ein anderer als Rückfallposition zur Verfügung steht.

Bei Verwenden zumindest zweier Sicherheitselemente, welche von demselben Sicherheitsverwaltungsdienst verwaltet werden, kann sichergestellt werden, dass im Falle von Problemen mit einem der beiden Sicherheitselemente zumindest das andere Sicherheitselement zur Verfügung steht und damit der entsprechende Sicherheitsverwaltungsdienst.

Nach Ausführungsformen umfasst die Auswahl obligatorisch zumindest zwei Sicherheitselemente, welche von zwei unterschiedliche Sicherheitsverwaltungsdiensten verwaltet werden, unabhängig von Nutzereingaben.

Nach Ausführungsformen umfasst die Auswahl obligatorisch zumindest zwei Sicherheitselemente, welche von demselben Sicherheitsverwaltungsdienst verwaltet werden, unabhängig von Nutzereingaben.

Nach Ausführungsformen umfasst das kryptographische Koppeln ein initiales Authentifizieren des installierten Applets durch die Applikation.

Ausführungsformen können den Vorteil haben, dass durch das Authentifizieren des installierten Applets durch die Applikation seitens der Applikation sichergestellt werden kann, dass es sich bei dem installierten Applet um ein valides Applet handelt. Beispielsweise erfolgt das initiale Authentifizieren unter Verwendung eines Challenge-Response-Verfahrens.

Nach Ausführungsformen umfasst das Verfahren ein Erzeugen eines asymmetrischen Schlüsselpaars für die Applikation, wobei das asymmetrischen Schlüsselpaar der Applikation einen öffentlichen kryptographischen Schlüssel und einen privaten kryptographischen Schlüssel der Applikation umfasst.

Ausführungsformen können den Vorteil haben, dass der Applikation ein asymmetrisches Schlüsselpaar zur Verfügung steht.

Nach Ausführungsformen wird das asymmetrischen Schlüsselpaar der Applikation lokal auf dem mobilen Endgerät erzeugt. Nach Ausführungsformen wird das asymmetrischen Schlüsselpaar durch die Applikation erzeugt. Nach Ausführungsformen wird das asymmetrischen Schlüsselpaar durch ein Schlüsselerzeugungs- und Schlüsselverwaltungsprogramm, beispielsweise einem sogenannten Key Store erzeugt. Beispielsweise wird das Schlüsselerzeugungs- und Schlüsselverwaltungsprogramm von dem Betriebssystem des Endgerätes bereitgestellt.

Nach Ausführungsformen ist der Applikation ein eindeutiger Identifikator zugeordnet. Nach Ausführungsformen umfasst die installierte Applikation den eindeutigen Identifikator.

Ausführungsformen können den Vorteil haben, dass die Applikation anhand des eindeutigen Identifikators eindeutig identifizierbar ist.

Nach Ausführungsformen erzeugt die Applikation, beispielsweise im Zuge des Installierens, den eindeutigen Identifikator. Nach Ausführungsformen sendet die Applikation, beispielsweise im Zuge des Installierens, den erzeugten eindeutigen Identifikator zur Registrierung an einen Verwaltungsserver zum Verwalten der Applikation.

Nach Ausführungsformen empfängt die Applikation, beispielsweise im Zuge des Installierens, den eindeutigen Identifikator von einem Verwaltungsserver zum Verwalten der Applikation.

Nach Ausführungsformen umfasst das Verfahren ferner ein Bereitstellen eines Zertifikats der Applikation, wobei das Zertifikat der Applikation den öffentlichen kryptographischen Schlüssel der Applikation und einen eindeutigen Identifikator der Applikation.

Ausführungsformen können den Vorteil haben, dass der Applikation der öffentliche kryptographische Schlüssel sowie der eindeutige Identifikator durch das Zertifikat zur Verfügung gestellt werden können.

Nach Ausführungsformen wird das Zertifikat der Applikation beispielsweise von einem Verwaltungsserver zum Verwalten der Applikation bereitgestellt. Beispielsweise erzeugt der Verwaltungsserver als Zertifizierungsserver das Zertifikat der Applikation. Beispielsweise stellt der Verwaltungsserver das von einem Zertifizierungsserver erzeugte Zertifikat der Applikation bereit.

Nach Ausführungsformen umfasst das Bereitstellen des Zertifikats der Applikation:
- Senden einer Zertifikatsanfrage von der Applikation über das Netzwerk an einen Verwaltungsserver zum Verwalten der Applikation, wobei die Zertifizierungsanfrage den öffentlichen kryptographischen Schlüssel der Applikation und den eindeutigen Identifikator der Applikation umfasst,
- In Antwort auf die Zertifikatsanfrage, Empfangen des Zertifikats der Applikation von dem Zertifizierungsserver durch die Applikation.

Nach Ausführungsformen werden die Zertifikatsanfrage und/oder die Antwort über einen verschlüsselten Kanal zwischen der Applikation und dem Verwaltungsserver gesendet.

Nach Ausführungsformen umfasst das Verfahren ferner den Aufbau des verschlüsselten Kanals zwischen der Applikation und dem Zertifizierungsserver. Nach Ausführungsformen handelt es sich bei dem verschlüsselten Kanal um einen mit TLS (Transport Layer Security)-Verschlüsselung verschlüsselten Kanal. Beispielsweise wird die TLS-Verschlüsselung in Verbindung mit HTTPS verwendet.

Nach Ausführungsformen umfasst das kryptographische Koppeln der Applikation mit dem installierten Applet:
- Senden einer ersten Kopplungsanfrage von der Applikation an das Sicherheitsverwaltungsprogrammmodul des ausgewählten Sicherheitsverwaltungsdienstes,
- Senden einer zweiten Kopplungsanfrage von dem die erste Kopplungsanfrage empfangenden Sicherheitsverwaltungsprogrammmodul über das Netzwerk an den Server des ausgewählten Sicherheitsverwaltungsdienstes,
- Aufbau eines zweiten verschlüsselten Kanals zwischen dem ausgewählten Sicherheitselement und dem Server des ausgewählten Sicherheitsverwaltungsdienstes unter Verwendung des kryptographischen Schlüssels des Sicherheitsverwaltungsdienstes,
- Schreiben des öffentlichen kryptographischen Schlüssels der Applikation in einen dem applikationsspezifischen Applet zugeordneten Speicherbereich des ausgewählten Sicherheitselements durch den Server des ausgewählten Sicherheitsverwaltungsdienstes über den zweiten verschlüsselten Kanal,

Ausführungsformen können den Vorteil haben, dass der öffentliche kryptographische Schlüssel der Applikation in einem dem applikationsspezifischen Applet zugeordneten Speicherbereich des ausgewählten Sicherheitselements, d.h. eine Sub-Security-Domain des entsprechenden Applets, der öffentliche kryptographische Schlüssel der Applikation eingetragen werden kann. Unter Verwendung des öffentlichen kryptographischen Schlüssels der Applikation können mit dem privaten kryptographischen Schlüssel der Applikation verschlüsselte Informationen durch das Sicherheitselement eindeutig der Applikation zugeordnet werden.

Nach alternativen Ausführungsformen kann anstelle des asymmetrischen öffentlichen kryptographischen Schlüsselpaars der Applikation auch ein symmetrischer Schlüssel der Applikation verwendet werden.

Ein entsprechender Prüfschlüssel kann beispielsweise durch ein Root-Zertifikat bereitgestellt werden. Beispielsweise wird eine Zertifikatskette bereitgestellt, bei welcher jedes der Zertifikate jeweils einen kryptographischen Schlüssel als Signaturprüfschlüssel, insbesondere einen öffentlichen kryptographischen Schlüssel, umfasst, mittels dessen eine Signatur in der Signaturkette, welche zu dem Zertifikat der Applikation führt, geprüft werden kann.

Nach Ausführungsformen umfasst die erste Kopplungsanfrage den öffentlichen kryptographischen Schlüssel der Applikation und/oder den eindeutigen Identifikator der Applikation.

Nach Ausführungsformen umfasst die zweite Kopplungsanfrage den öffentlichen kryptographischen Schlüssel der Applikation und/oder den eindeutigen Identifikator der Applikation.

Nach Ausführungsformen umfasst das kryptographische Koppeln ferner ein Schreiben eines oder mehrerer Prüfschlüssel zum Prüfen einer Signatur des Zertifikats der Applikation in das ausgewählten Sicherheitselement durch den Server des ausgewählten Sicherheitsverwaltungsdienstes über den zweiten verschlüsselten Kanal.

Nach Ausführungsformen umfasst das kryptographische Koppeln ferner ein Schreiben des eindeutigen Identifikators der Applikation in das ausgewählten Sicherheitselement durch den Server des ausgewählten Sicherheitsverwaltungsdienstes über den zweiten verschlüsselten Kanal.

Nach Ausführungsformen umfasst das kryptographische Koppeln ferner ein Schreiben eines initialen asymmetrischen Schlüsselpaars des applikationsspezifischen Applets in den dem applikationsspezifischen Applet zugeordneten Speicherbereich des ausgewählten Sicherheitselements durch den Server des ausgewählten Sicherheitsverwaltungsdienstes über den zweiten verschlüsselten Kanal, wobei das initialen asymmetrischen Schlüsselpaars des Applets einen initialen öffentlichen kryptographischen Schlüssel und einen initialen privaten kryptographischen Schlüssel umfasst.

Ausführungsformen können den Vorteil haben, dass der Sicherheitsverwaltungsdienst das initiale asymmetrische Schlüsselpaar für das Sicherheitselement zur Verfügung stellt.

Nach Ausführungsformen wird das initiale asymmetrische Schlüsselpaar des Applets von dem Verwaltungsserver zum Verwalten der Applikation erzeugt. Nach Ausführungsformen sendet der Server des ausgewählten Sicherheitsverwaltungsdienstes eine Schlüsselanfrage an den Verwaltungsserver zum Verwalten der Applikation. Nach Ausführungsformen validiert der Verwaltungsserver die Schlüsselanfrage. Nach Ausführungsformen umfasst die Schlüsselanfrage den öffentlichen kryptographischen Schlüssel der Applikation und/oder den eindeutigen Identifikator der Applikation. Nach Ausführungsformen umfasst das Validieren der Schlüsselanfrage ein Validieren des öffentlichen kryptographischen Schlüssels der Applikation und/oder des eindeutigen Identifikators der Applikation. Nach Ausführungsformen empfängt der Server des ausgewählten Sicherheitsverwaltungsdienstes in Antwort auf die Schlüsselanfrage das initialen asymmetrischen Schlüsselpaar des Applets von dem Verwaltungsserver.

Nach Ausführungsformen empfängt das Sicherheitsverwaltungsprogrammmodul des ausgewählten Sicherheitsverwaltungsdienstes den initialen öffentlichen Schlüssel des Applets von dem Server des ausgewählten Sicherheitsverwaltungsdienstes.

Nach Ausführungsformen umfasst das Initialisieren der kryptographischen Kopplung ferner ein Erzeugen des initialen asymmetrischen Schlüsselpaars des applikationsspezifischen Applets mit dem initialen öffentlichen kryptographischen Schlüssel und dem initialen privaten kryptographischen Schlüssel durch das Applet.

Ausführungsformen können den Vorteil haben, dass das initiale asymmetrische Schlüsselpaar das applikationsspezifische Applet durch das Applet selbst, d.h. in dem Sicherheitselement, erzeugen wird.

Nach Ausführungsformen sendet das Applet den erzeugten initialen öffentlichen Schlüssel des Applets an den Server des ausgewählten Sicherheitsverwaltungsdienstes. Nach Ausführungsformen empfängt das Sicherheitsverwaltungsprogrammmodul des ausgewählten Sicherheitsverwaltungsdienstes den initialen öffentlichen Schlüssel des Applets von dem Server des ausgewählten Sicherheitsverwaltungsdienstes.

Nach Ausführungsformen umfasst das Verfahren ferner ein Empfangen des initialen öffentlichen kryptographischen Schlüssels des applikationsspezifischen Applets durch die Applikation von dem Sicherheitsverwaltungsprogrammmodul.

Ausführungsformen können den Vorteil haben, dass das Sicherheitsverwaltungsprogrammmodul nur den initialen öffentlichen kryptographischen Schlüssel des applikationsspezifischen Applets für die Applikation bereitstellen kann. Unter Verwendung des entsprechenden initialen öffentlichen kryptographischen Schlüssels des applikationsspezifischen Applets kann die Applikation Signaturen des Applets validieren. Das Sicherheitsverwaltungsprogrammmodul empfängt den initial öffentlichen kryptographischen Schlüssel beispielsweise von dem Server des Sicherheitsverwaltungsdienstes und leitet diesen an die Applikation weiter.

Nach Ausführungsformen umfasst das initiale Authentifizieren des Applets durch die Applikation:
- Berechnen eines geteilten Geheimnisses durch das Applet unter Verwendung des initialen privaten kryptographischen Schlüssels des Applets und des öffentlichen kryptographischen Schlüssels der Applikation,
- Berechnen des geteilten Geheimnisses durch die Applikation unter Verwendung des privaten kryptographischen Schlüssels der Applikation und des initialen öffentlichen kryptographischen Schlüssels des Applets,
- Erzeugen einer Zufallszahl durch das Applet,
- Erzeugen eines gemeinsamen Authentisierungsschlüssels zum Authentisieren von Informationen im Zuge der Kommunikation zwischen Applikation und Applet durch das Applet unter Verwendung des geteilten Geheimnisses und der erzeugten Zufallszahl,
- Erzeugen eines Authentisierungstoken durch das Applet unter Verwendung des Authentisierungsschlüssels und des öffentlichen kryptographischen Schlüssels der Applikation zum Authentisieren des Applets gegenüber der Applikation,
- Senden der Zufallszahl zusammen mit dem Authentisierungstoken von dem Applet an die Applikation,
- Erzeugen des gemeinsamen Authentisierungsschlüssels durch die Applikation unter Verwendung des geteilten Geheimnisses und der empfangenen Zufallszahl,
- Authentifizieren der empfangenen Zufallszahl und des Applets durch Verifizieren des empfangenen Authentisierungstokens durch die Applikation unter Verwendung des erzeugten gemeinsamen Authentisierungsschlüssels und des öffentlichen kryptographischen Schlüssels der Applikation.

Ausführungsformen können den Vorteil haben, dass ein effektives Verfahren zur initialen Authentifizierung des Applets durch die Applikation bereitgestellt werden kann.

Nach Ausführungsformen handelt es sich bei dem Authentisierungsschlüssel um einen Schlüssel zum Erzeugen eines Message Authentication Codes (MAC-Codes). Nach Ausführungsformen handelt es sich bei dem Authentisierungstoken um einen unter Verwendung des Authentisierungsschlüssels erzeugten MAC-Code der Zufallszahl.

Die Authentizität der übertragen Identitätsattribute kann beispielsweise durch Verwendung eines Message Authentication Codes (MAC) sichergestellt werden. Ein MAC wird beispielsweise unter Verwendung eines MAC-Algorithmus berechnet, welchem zu schützende Daten, d.h. die Identitätsattribute, und ein kryptographischer Schlüssel, beispielsweise ein symmetrischer kryptographischer Schlüssel, als Eingabedaten zur Verfügung gestellt werden. Unter Verwendung dieser Eingabedaten berechnet der MAC-Algorithmus eine Prüfsumme, welche als MAC dient. Zum Berechnen von MACs können beispielsweise Blockchiffren oder Hash-Funktionen verwendet werden. Als MAC kann beispielsweise ein HMAC (Keyed-Hash Message Authentication Code) verwendet werden, für dessen Konstruktion eine kryptographische Hash-Funktion, wie beispielsweise der Secure Hash Algorithm (SHA), und ein geheimer kryptographischer Schlüssel, beispielsweise ein symmetrischer kryptographischer Schlüssel, verwendet wird.

Zur Sicherung einer Datenübertragung, beispielsweise einer Übertragung von Identitätsattributen, wird zwischen Sender, beispielsweise das Applet, und Empfänger, beispielsweise einem auslesenden Computersystem, ein kryptographischer Schlüssel, beispielsweise ein symmetrischer kryptographischer Schlüssel, vereinbart. Der Sender verwendet diesen kryptographischen Schlüssel zum Berechnen eines MACs der zu übertragenden Daten und sendet den berechneten MAC zusammen mit den zu übertragenden Daten an den Empfänger. Der Empfänger berechnet seinerseits einen MAC für die empfangenen Daten unter Verwendung des kryptographischen Schlüssels und vergleicht das Ergebnis mit dem empfangenen MAC. Im Falle einer Übereinstimmung zwischen berechnetem MAC und empfangenen MAC berechnet ist die Integritätsprüfung erfolgreich und die empfangenen Daten werden als authentisch angesehen.

Im Falle eines MAC müssen sowohl Sender als auch Empfänger Kenntnis von dem verwendeten kryptographischen Schlüssel haben im Gegensatz zu einer Verwendung von reinen Hashfunktionen oder von Signaturen. Im Falle von reinen Hashfunktionen kommen beispielsweise keine kryptographischen Schlüssel zum Einsatz. Falls die Hashfunktionen öffentlich sind, kann jeder den Hashwert berechnen, insbesondere für manipulierte Nachrichten. Im Falle einer Signatur kennt nur der Signierende den zum Erstellen der Signatur verwendeten privaten kryptographischen Schlüssel, d.h. Signaturschlüssel, eines für die Signatur verwendeten asymmetrischen Schlüsselpaars. Der Signaturempfänger verfügt lediglich über den öffentlichen Schlüssel, d.h. Signaturprüfschlüssel, des für die Signatur verwendeten asymmetrischen Schlüsselpaars. Der Signaturempfänger kann die Signatur mithin prüfen unter Verwendung des Signaturprüfschlüssels, aber nicht selbst berechnen.

Nach Ausführungsformen umfasst das Verifizieren des empfangenen Authentisierungstokens durch die Applikation:
- Erzeugen eines Authentisierungstokens durch die Applikation unter Verwendung des durch die Applikation erzeugten gemeinsamen Authentisierungsschlüssels und des öffentlichen kryptographischen Schlüssels der Applikation,
- Vergleichen des durch die Applikation erzeugten Authentisierungstokens mit dem von dem Applet empfangene Authentisierungstoken, wobei die Verifikation bei einer Übereinstimmung der beiden Authentisierungstoken als erfolgreich und das Applet damit als erfolgreich authentifiziert gilt.

Nach Ausführungsformen umfasst das kryptographische Koppeln ferner ein Erzeugen eines gemeinsamen symmetrischen kryptographischen Schlüssels durch das Applet und durch die Applikation zum Verschlüsseln der Kommunikation zwischen Applikation und Applet unter Verwendung des geteilten Geheimnisses und der Zufallszahl.

Ausführungsformen können den Vorteil haben, dass durch den gemeinsamen symmetrischen kryptographischen Schlüssel eine Kommunikation zwischen Applet und der Applikation in effektiver und effizienter Weise verschlüsselt werden kann.

Nach Ausführungsformen wird der gemeinsame symmetrische kryptographische Schlüssel durch das Applet und durch die Applikation jeweils zusammen mit dem gemeinsamen Authentisierungsschlüssels berechnet.

Ausführungsformen können den Vorteil haben, dass unter Verwendung des gemeinsamen Authentisierungsschlüssel eine Authentizität von Nachrichten, welche zwischen der Applikation und dem Applet ausgetauscht werden, validiert werden kann.

Ausführungsformen umfassen ein mobiles Endgerät umfassend einen Prozessor, eine Kommunikationsschnittstelle zur Kommunikation über ein Netzwerk und eine Mehrzahl von Sicherheitselementen, wobei die Sicherheitselemente jeweils zum Bereitstellen der applikationsspezifischen kryptographischen Sicherheitsfunktionen für mobile Applikation verwendbar sind und jeweils von einem externen Sicherheitsverwaltungsdienst verwaltet werden,
wobei auf dem mobilen Endgerät für jeden der externen Sicherheitsverwaltungsdienste der Mehrzahl von Sicherheitsverwaltungsdiensten jeweils ein lokales Sicherheitsverwaltungsprogrammmodul installiert ist,
wobei der Prozessor dazu konfiguriert ist ein Verfahren zum Initialisieren applikationsspezifischer kryptographischer Sicherheitsfunktionen für eine mobile Applikation auf einem mobilen Endgerät auszuführen, welches umfasst:
   - Installieren der mobilen Applikation auf dem mobilen Endgerät,
   - Ermitteln der auf dem mobilen Endgerät zur Verfügung stehenden und zum Bereitstellen der applikationsspezifischen kryptographischen Sicherheitsfunktionen für die mobile Applikation verwendbaren Mehrzahl von Sicherheitselementen und der die entsprechenden Sicherheitselemente jeweils verwaltenden Sicherheitsverwaltungsdienste durch die installierte Applikation,
   - Auswahl zumindest eines Sicherheitselements aus der ermittelten Mehrzahl von Sicherheitselementen und des zumindest einen Sicherheitsverwaltungsdienstes, welcher das ausgewählte Sicherheitselement verwaltetet,
   - Senden einer ersten Initialisierungsanfrage von der Applikation an das zumindest eine auf dem mobilen Endgerät installierte Sicherheitsverwaltungsprogrammmodul des ausgewählten Sicherheitsverwaltungsdienstes zum Implementieren der applikationsspezifischen kryptographischen Sicherheitsfunktionen für die Applikation in dem ausgewählten Sicherheitselement,
   - Senden einer zweiten Initialisierungsanfrage von dem die erste Initialisierungsanfrage empfangenden Sicherheitsverwaltungsprogrammmodul über ein Netzwerk an einen Server des ausgewählten Sicherheitsverwaltungsdienstes zum Implementieren der applikationsspezifischen kryptographischen Sicherheitsfunktionen für die Applikation auf dem ausgewählten Sicherheitselement,
   - Aufbau eines ersten verschlüsselten Kanals zwischen dem ausgewählten Sicherheitselement und dem Server des ausgewählten Sicherheitsverwaltungsdienstes unter Verwendung eines kryptographischen Schlüssels des Sicherheitsverwaltungsdienstes, wobei der kryptographische Schlüssel des Sicherheitsverwaltungsdienstes einen dem Sicherheitsverwaltungsdienst vorbehaltenen Schreibzugriff auf das von dem Sicherheitsverwaltungsdienst verwaltete Sicherheitselement nachweist,
   - Installieren eines der Applikation zugeordneten applikationsspezifischen Applets in dem ausgewählten Sicherheitselement durch den Server des ausgewählten Sicherheitsverwaltungsdienstes über den verschlüsselten ersten Kanal, wobei das Applet die applikationsspezifischen kryptographischen Sicherheitsfunktionen für die Applikation bereitstellt,
   - kryptographisches Koppeln der Applikation mit dem installierten Applet zum Freischalten einer Nutzung der von dem Applet bereitgestellten applikationsspezifischen kryptographischen Sicherheitsfunktionen für die Applikation.

Nach Ausführungsformen ist das mobile Endgerät dazu konfiguriert jede der zuvor beschriebenen Ausführungsformen des Verfahrens zum Initialisieren applikationsspezifischer kryptographischer Sicherheitsfunktionen auszuführen.

Ausführungsformen umfassen ferner ein System, welches ein mobiles Endgerät nach der zuvor beschriebenen Ausführungsformen und ein oder mehrere Server der ein oder mehreren ausgewählten Sicherheitsverwaltungsdienste zum Verwalten der ausgewählten ein oder mehreren Sicherheitselemente des mobilen Endgeräts umfasst.

Nach Ausführungsformen ist das System dazu konfiguriert jede der zuvor beschriebenen Ausführungsformen des Verfahrens zum Initialisieren applikationsspezifischer kryptographischer Sicherheitsfunktionen auszuführen

Nach Ausführungsformen umfasst das System ferner einen Verwaltungsserver zum Verwalten der Applikation.

Nach Ausführungsformen ist das System dazu konfiguriert jede der zuvor beschriebenen Ausführungsformen des Verfahrens zum Initialisieren applikationsspezifischer kryptographischer Sicherheitsfunktionen, welche einen Verwaltungsserver umfasst, auszuführen.

Im Weiteren werden Ausführungsformen der Erfindung mit Bezugnahme auf die Zeichnungen näher erläutert. Es zeigen:
- Figur 1: ein schematisches Diagramm eines exemplarischen mobilen Endgeräts,
- Figur 2: ein schematisches Diagramm eines exemplarischen Sicherheitsverwaltungsdienstservers,
- Figur 3: ein Flussdiagramm eines exemplarischen Verfahrens zum Initialisieren applikationsspezifischer kryptographischer Sicherheitsfunktionen,
- Figur 4: ein Flussdiagramm eines exemplarischen Verfahrens zum kryptographischen Koppeln eines Applets mit einer Applikation,
- Figur 5: ein Flussdiagramm eines exemplarischen Verfahrens zum kryptographischen Koppeln eines Applets mit einer Applikation,
- Figur 6: ein schematisches Diagramm eines exemplarischen mobilen Endgeräts, und
- Figur 7: ein schematisches Diagramm eines exemplarischen Systems.

Elemente der nachfolgenden Ausführungsformen, die einander entsprechen, werden mit denselben Bezugszeichen gekennzeichnet.

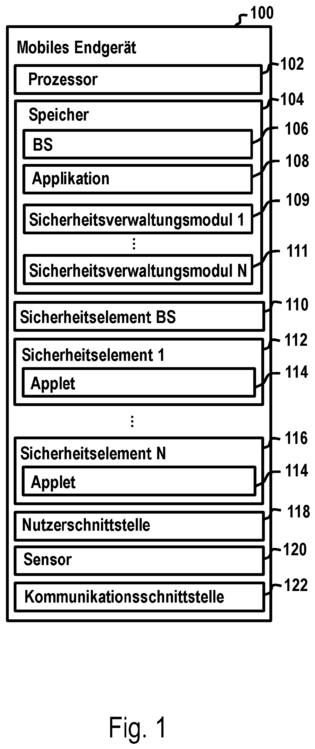

Figur 1 zeigt ein exemplarisches mobiles Endgerät 100, beispielsweise ein Smartphone, welches einen Speicher 104 mit Programminstruktionen umfasst, welche von einem Prozessor 102 ausgeführt werden. Die Programminstruktionen können beispielsweise ein auf dem mobiles Endgerät 100 installierten Betriebssystems 106. Ferner können auf dem mobiles Endgerät 100 Applikationen bzw. Anwendungsprogramme 108 installiert werden. Beispielsweise umfasst das mobile Endgerät 100 ein Sicherheitselement 110, welches dem Betriebssystem 106 zugeordnet ist und für dieses kryptographische Mittel bereitstellt, wie beispielsweise kryptographische Schlüssel, kryptographische Funktionen und/oder kryptographische Protokolle. Das Sicherheitselement 110 des Betriebssystems 106 stellt beispielsweise einen Key Store bzw. Schlüsselspeicher zum Speichern von kryptographischen Schlüsseln bereit, wie etwa symmetrische, öffentliche und/oder private kryptographische Schlüssel, und von Zertifikaten, wie beispielsweise Berechtigungszertifikate, Public-Key-Zertifikate und/oder Attributzertifikate. Die von dem ersten Sicherheitselement 110 bereitgestellten kryptographischen Mittel versetzten das Betriebssystem 106 beispielsweise dazu in die Lage Daten zu verschlüsseln und/oder zu entschlüsseln, sowie Signaturen zu erstellen und/oder zu prüfen. Beispielsweise versetzen die von dem ersten Sicherheitselement 110 bereitgestellten kryptographischen Mittel das Betriebssystem 106 dazu in die Lage Challenge Response-Verfahren auszuführen bzw. an diesen teilzunehmen.

Beispielsweise umfasst das mobile Endgerät 100 weitere Sicherheitselemente 112, 116. Diese Sicherheitselemente 112, 116 können für Applikationen 108, welche auf dem mobilen Endgerät 100 gespeichert werden kryptographische Sicherheitsfunktionen bereitstellen. Hierzu können auf den Sicherheitselemente 112, 116 Applets 114 installiert werden, welche jeweils einer der Applikationen 108 zugeordnet sind und für diese applikationsspezifische kryptographische Sicherheitsfunktionen bereitstellen. Bei den Applikationen 108 handelt es sich beispielsweise um Applikationen, welche elektronischen Identitäten verwalten, zu deren sicherer Nutzung die jeweils von den Applet 114 der entsprechenden Applikation 108 bereitgestellten kryptographische Sicherheitsfunktionen verwendet werden können. Beispielsweise kann eine Applikation 108 für unterschiedliche elektronischen Identitäten auch unterschiedliche Applets 114 nutzen. Die Applets 114 ermöglichen es den Applikationen 108 jeweils für die Applikationen 108 applikationsspezifische kryptographische Mittel zur Verfügung zu stellen. Die entsprechenden applikationsspezifische kryptographische Mittel stellen die Applets 114 jeweils für die entsprechenden Applikationen bereit. Beispielsweise umfassen die applikationsspezifischen kryptographischen Mittel kryptographische Schlüssel, kryptographische Funktionen und/oder kryptographische Protokolle.

Die Applets 114 bzw. den entsprechenden Applets 114 zugeordnete Speicherbereiche der Sicherheitselemente 112, 116 stellen beispielsweise jeweils einen Key Store bzw. Schlüsselspeicher zum Speichern von kryptographischen Schlüsseln für die ihnen individuell zugeordnete Applikation 108 bereit, wie etwa symmetrische, öffentliche und/oder private kryptographischer Schlüssel, und von Zertifikaten, wie beispielsweise Berechtigungszertifikate, Public-Key-Zertifikate und/oder Attributzertifikate. Die bereitgestellten applikationsspezifischen kryptographischen Mittel versetzten die Applikationen 108 beispielsweise jeweils dazu in die Lage Daten, etwa Daten der von ihnen verwalteten elektronischen Identitäten, z.B. Identitätsattribute, zu verschlüsseln und/oder zu entschlüsseln, sowie Signaturen zu erstellen und/oder zu prüfen. Beispielsweise versetzen die bereitgestellten applikationsspezifischen kryptographischen Mittel die Applikationen 108 dazu in die Lage Challenge Response-Verfahren auszuführen bzw. an diesen teilzunehmen. Die Sicherheitselemente 110, 112, 116 können beispielsweise jeweils als eSim und/oder eUICC implementiert sein.

Die Sicherheitselemente 112, 116 werden beispielsweise jeweils von einem externen Sicherheitsverwaltungsdienst verwaltet. Die Sicherheitsverwaltungsdienste sind dazu konfiguriert applikationsspezifische kryptographische Sicherheitsfunktionen für Applikationen 108, welche auf dem mobilen Endgerät installiert werden, auf den von ihnen verwalteten Sicherheitselementen 112, 116 zu initialisieren. Hierzu installieren die Sicherheitsverwaltungsdienste beispielsweise Applets 114 für die entsprechenden Applikationen 108 auf den von ihnen verwalteten Sicherheitselementen 112, 116, welche mit den Applikationen 108 gekoppelt werden und für diese applikationsspezifische kryptographische Sicherheitsfunktionen bereitstellen. Zur Kommunikation mit den Sicherheitsverwaltungsdiensten umfasst das mobile Endgerät 100 beispielsweise Sicherheitsverwaltungsprogrammmodule 109, 111, welche jeweils einem der Sicherheitsverwaltungsdienste zugeordneten sind, welche eines der Sicherheitselemente 112, 116 des mobilen Endgeräts 100 verwalten. Unter Verwendung der Sicherheitsverwaltungsprogrammmodule 109, 111 können für Applikationen 108, welche auf dem mobilen Endgerät 100 installiert werden, ein Installieren von Applets 114 in den Sicherheitselementen 112, 116 initialisiert und damit applikationsspezifische kryptographische Sicherheitsfunktionen bereitgestellt werden. Beispielsweise kann eine Applet 114 einer Applikation 108 auf einem Sicherheitselement 112, 116 installiert sein. Beispielsweise kann eine Applet 114 einer Applikation 108 auch in einer Mehrzahl von Sicherheitselementen 112, 116 installiert sein, so dass die Applikation 108 dazu in die Lage versetzt wird eine mehrere Sicherheitselemente 112, 116 und die von diesen für die Applikation 108 über das Applet 114 bereitgestellten applikationsspezifischen kryptographischen Sicherheitsfunktionen zu nutzen.

Ferner umfasst das mobile Endgerät 100 eine Nutzerschnittelle 118, welche beispielsweise ein Display, insbesondere ein Touchscreen, umfasst. Unter Verwendung des Nutzerschnittelle 118, kann der Nutzer mit dem mobiles Endgerät 100 interagieren. Beispielsweise kann der Nutzer zum Bereitstellen von Authentifizierungsdaten bzw. Authentifizierungsmerkmalen aufgefordert werden. Zum Erfassen von Authentifizierungsdaten des Nutzers umfasst das mobile Endgerät 100 einen Sensor bzw. Authentifizierungssensor 120, welcher beispielsweise in die Nutzerschnittstelle 118 integriert oder als eigenständige Komponente implementiert sein kann. Die Authentifizierungsdaten können beispielsweise biometrische Daten des Nutzers umfassen, wie beispielsweise: Fingerabdruckdaten, Körpergeometriedaten/Anthropometriedaten, wie etwa Gesichts-, Hand-, Ohrgeometriedaten, Handlinienstrukturdaten, Venenstrukturdaten, wie etwa Handvenenstrukturdaten, Irisdaten, Retinadaten, Stimmerkennungsdaten, Nagelbettmuster. Die Authentifizierungsdaten können beispielsweise ein Wissen des Nutzers umfassen, wie eine PIN oder Passwort. Ferner können die Authentifizierungsdaten beispielsweise Verhaltensmerkmale bzw. Verhaltensdaten des Nutzers umfassen, wie beispielsweise Bewegungsdaten des mobile Endgerät 100, welche durch von grob- und/oder feinmotorische Bewegungen des Nutzers verursacht werden, wenn dieser das des mobile Endgerät 100 bei sich trägt und/oder nutzt. Ein entsprechendes Authentifizieren des Nutzers kann beispielsweise Voraussetzung für ein Freigeben von Identitätsattributen der elektronischen Identität zum Auslesen durch ein auslesendes Computersystem sein. Durch eine entsprechende Nutzerauthentifizierung kann zum einen sichergestellt werden, dass das mobile Endgerät 100 von einem berechtigten Nutzer genutzt wird. Zum andern kann das Bereitstellen von Authentifizierungsdaten durch den Nutzer ein Einverständnis des Nutzers zum Auslesen der Identitätsattributen der elektronischen Identität durch das auslesende Computersystem darstellen. Schließlich umfasst das mobile Endgerät 100 eine Kommunikationsschnittstelle 122, etwa eine Antenne, welche konfiguriert ist für eine kontaktlose oder kontaktbehaftete Kommunikation etwa mit dem auslesenden Computersystem. Beispielsweise kann die Kommunikation mit dem auslesenden Computersystem über ein Netzwerk, wie etwa ein Intranet oder das Internet, erfolgen.

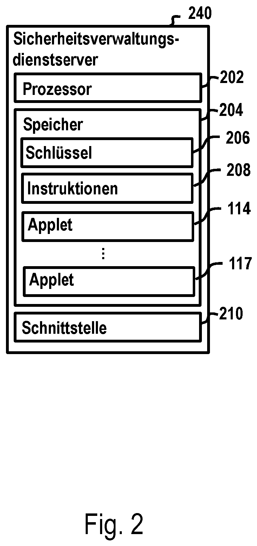

Figur 2 zeigt einen exemplarischen Server 240 eines Sicherheitsverwaltungsdienstes. Der Sicherheitsverwaltungsdienstserver 240 umfasst einen Prozessor 202, einen Speicher 204 und eine Kommunikationsschnittstelle 210. In dem Speicher 204 sind Programminstruktionen 208 gespeichert zum Verwalten eines dem Sicherheitsverwaltungsdienst verwalteten Sicherheitselements auf einem mobilen Endgerät. Bei Ausführung der Programminstruktionen 208 steuert der Prozessor 202 den Sicherheitsverwaltungsdienstserver 240 beispielsweise zum Initialisieren eines applikationsspezifischen Applets 114 für eine auf dem mobilen Endgerät installierte Applikation in dem von dem Sicherheitsverwaltungsdienst verwalteten Sicherheitselement des entsprechenden mobilen Endgeräts. Zum Nachweis einer Schreibberechtigung zum Installieren des Applets 114 auf dem Sicherheitselement verwendet der Sicherheitsverwaltungsdienstserver 240 beispielsweise einen kryptographischen Schlüssel. Sicherheitsverwaltungsdienstserver 240 verfügt beispielsweise über eine Mehrzahl von Applets 114, 117 für verschiedene Applikationen, welche dem Sicherheitsverwaltungsdienst von den Herausgebern der entsprechenden Applikationen zur Verfügung gestellt werden. Wird eine Applikation auf einem mobilen Endgerät mit einem von dem Sicherheitsverwaltungsdienst verwalteten Sicherheitselement installiert, kann der Sicherheitsverwaltungsdienstserver 240 das zu der entsprechenden Applikation gehörende Applet 114 auf dem entsprechenden Sicherheitselement installieren, um der Applikation applikationsspezifische kryptographische Sicherheitsfunktionen zur Verfügung stellen zu können.

Dieser kryptographische Schlüssel 206 kann beispielsweise ein symmetrischer oder ein privater kryptographischer Schlüssel eines asymmetrischer Schlüsselpaars sein. Beispielsweise verfügt das Sicherheitselement zum Validieren der Schreibberechtigung des Sicherheitsverwaltungsdienstes ebenfalls über den symmetrischen kryptographischen Schlüssel oder über einen öffentlichen kryptographischen Schlüssel des asymmetrischen Schlüsselpaars. Beispielsweise verwendet der Sicherheitsverwaltungsdienstserver 240 ein Berechtigungszertifikat im Zuge des Nachweises der Schreibberechtigung. Beispielsweise verfügt das Sicherheitselement über Mittel zum Validieren des Berechtigungszertifikats, etwa einen Signaturprüfschlüssel, z.B. einen öffentlichen kryptographischen Schlüssel, zum Prüfen einer Signatur des Berechtigungszertifikats. Der Signaturprüfschlüssel kann beispielsweise von einem in dem Sicherheitselement hinterlegten Root-Zertifikat umfasst sein. Die Mittel zum Validieren der Schreibberechtigung des Sicherheitsverwaltungsdienstes werden beispielsweise bereits im Zuge der Herstellung des Sicherheitselements und/oder des mobilen Endgeräts in das Sicherheitselement eingebracht.

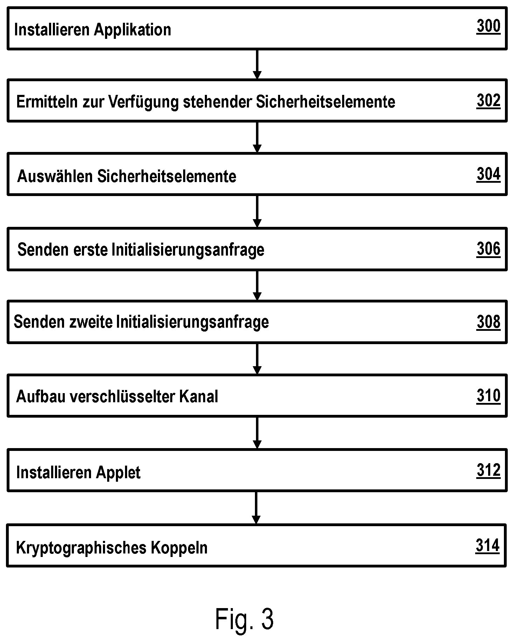

Figur 3 zeigt ein exemplarisches Verfahren zum Initialisieren applikationsspezifischer kryptographischer Sicherheitsfunktionen für eine mobile Applikation auf einem mobilen Endgerät. Das mobile Endgerät umfasst beispielsweise eine Mehrzahl von Sicherheitselementen, welche zum Bereitstellen der applikationsspezifischen kryptographischen Sicherheitsfunktionen für die mobile Applikation verwendbare sind. Die individuellen Sicherheitselemente werden jeweils einem externen Sicherheitsverwaltungsdienst verwaltet. Für jeden der externen Sicherheitsverwaltungsdienste ist beispielsweise ein lokales Sicherheitsverwaltungsprogrammmodul auf dem mobilen Endgerät installiert.

In Block 300 wird eine mobile Applikation auf dem mobilen Endgerät installiert. In Block 302 ermittelt die installierte Applikation, welche der auf dem mobilen Endgerät zur Verfügung stehenden Sicherheitselemente zum Bereitstellen applikationsspezifischer kryptographischer Sicherheitsfunktionen für die mobile Applikation verwendbar sind. In Block 304 wird zumindest eines der ermittelten Sicherheitselemente ausgewählt. Beispielsweise werden mehrere der ermittelten Sicherheitselemente ausgewählt. Die Auswahl kann automatisch erfolgen. Beispielsweise kann auch ein Auswahlvorschlag erstellt und dem Nutzer des mobilen Endgeräts angezeigt werden. Der Nutzer kann dem Vorschlag beispielsweise zustimmen oder diesen ändern. Nach Ausführungsformen ist ein Teil des Vorschlags obligatorisch und kann von dem Nutzer nicht geändert werden, während ein anderer Teil fakultativ ist und von dem Nutzer geändert werden kann. Die ausgewählten Sicherheitselemente werden jeweils von einem Sicherheitsverwaltungsdienst verwaltet. Für jeden dieser Sicherheitsverwaltungsdienst ist jeweils ein Sicherheitsverwaltungsprogrammmodul auf dem mobilen Endgerät installiert. Falls für einen der Sicherheitsverwaltungsdienste ein Sicherheitsverwaltungsprogrammmodul fehlt, kann dieses im Zuge des Verfahrens beispielsweise installiert werden. Für jedes der ausgewählten Sicherheitselemente wird beispielsweise Folgendes ausgeführt: In Block 306 wird eine Initialisierungsanfrage von der installierten Applikation an das auf dem mobilen Endgerät installierte Sicherheitsverwaltungsprogrammmodul des Sicherheitsverwaltungsdienstes gesendet, welcher das ausgewählte Sicherheitselement verwaltet. Die Initialisierungsanfrage fragt ein Implementieren applikationsspezifischer kryptographischer Sicherheitsfunktionen für die Applikation in dem ausgewählten Sicherheitselement an, welches der entsprechende Sicherheitsverwaltungsdienst verwaltet. In Block 308 wird von dem Sicherheitsverwaltungsprogrammmodul eine Initialisierungsanfrage über ein Netzwerk an einen Server des ausgewählten Sicherheitsverwaltungsdienstes gesendet und ein Implementieren der applikationsspezifischen kryptographischen Sicherheitsfunktionen für die installierte Applikation auf dem ausgewählten Sicherheitselement durch den Sicherheitsverwaltungsdienst angefragt.

In Block 310 wird ein verschlüsselter Kanal zwischen dem ausgewählten Sicherheitselement und dem Server des ausgewählten Sicherheitsverwaltungsdienstes aufgebaut. Hierzu wird beispielsweise ein kryptographischer Schlüssel des Sicherheitsverwaltungsdienstes verwendet. Dieser kryptographische Schlüssel des Sicherheitsverwaltungsdienstes weist beispielsweise einen dem Sicherheitsverwaltungsdienst vorbehaltenen Schreibzugriff auf das von dem Sicherheitsverwaltungsdienst verwaltete Sicherheitselement nach. In Block 312 wird über den verschlüsselten Kanal ein der Applikation zugeordnetes applikationsspezifisches Applet in dem ausgewählten Sicherheitselement durch den Server des ausgewählten Sicherheitsverwaltungsdienstes installiert. Das installierte Applet stellt applikationsspezifische kryptographische Sicherheitsfunktionen für die Applikation bereit. In Block 314 wird die Applikation mit dem installierten Applet kryptographisch gekoppelt, wodurch eine Nutzung der von dem Applet bereitgestellten applikationsspezifischen kryptographischen Sicherheitsfunktionen für die Applikation freigeschaltet wird. Das Applet wird ferner beispielsweise noch mit einem initialen asymmetrischen Schlüsselpaar versehen. Das entsprechende initiale asymmetrische Schlüsselpaar wird beispielsweise von dem Server des ausgewählten Sicherheitsverwaltungsdienstes in dem applikationsspezifischen Applet zugeordneten Speicherbereich des ausgewählten Sicherheitselements über den verschlüsselten Kanal eingebracht. Nach alternativen Ausführungsformen wird das initiale asymmetrische Schlüsselpaar beispielsweise von dem applikationsspezifischen Applet erzeugt und in dem applikationsspezifischen Applet zugeordneten Speicherbereich des ausgewählten Sicherheitselements gespeichert. Ein öffentlicher kryptographischer Schlüssel des initialen asymmetrischen Schlüsselpaars wird beispielsweise der Applikation von dem Server des ausgewählten Sicherheitsverwaltungsdienstes über das Sicherheitsverwaltungsprogrammmodul des entsprechenden Sicherheitsverwaltungsdienstes zur Verfügung gestellt. Der öffentliche kryptographische Schlüssel des initialen asymmetrischen Schlüsselpaars wird beispielsweise an den Server des ausgewählten Sicherheitsverwaltungsdienstes gesendet. Der öffentliche kryptographische Schlüssel des initialen asymmetrischen Schlüsselpaars wird beispielsweise der Applikation von dem Server des ausgewählten Sicherheitsverwaltungsdienstes über das Sicherheitsverwaltungsprogrammmodul des entsprechenden Sicherheitsverwaltungsdienstes zur Verfügung gestellt.

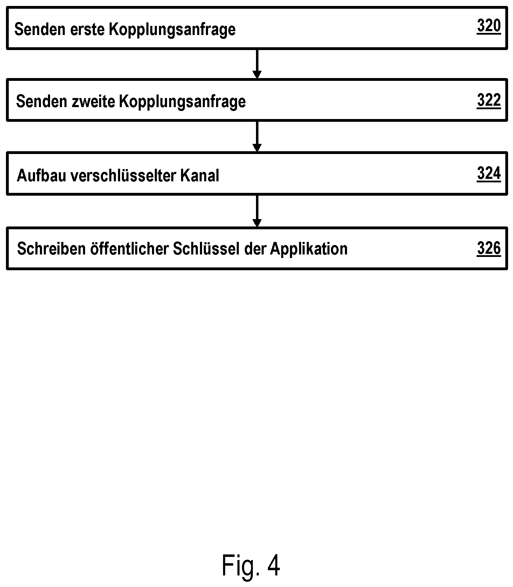

Figur 4 zeigt ein exemplarisches Verfahren zum kryptographischen Koppeln der Applikation mit dem installierten Applet. In Block 320 wird beispielsweise eine Kopplungsanfrage der Applikation an das Sicherheitsverwaltungsprogrammmodul des ausgewählten Sicherheitsverwaltungsdienstes gesendet. In Block 322 sendet das Sicherheitsverwaltungsprogrammmodul eine Kopplungsanfrage über das Netzwerk an den Server des ausgewählten Sicherheitsverwaltungsdienstes. In Block 324 wird ein verschlüsselter Kanal zwischen dem ausgewählten Sicherheitselement und dem Server des ausgewählten Sicherheitsverwaltungsdienstes aufgebaut. Hierzu wird beispielsweise der kryptographische Schlüssel des Sicherheitsverwaltungsdienstes verwendet. In Block 326 schreibt der Server des ausgewählten Sicherheitsverwaltungsdienstes über den zweiten verschlüsselten Kanal den öffentlichen kryptographischen Schlüssel der Applikation in einen dem applikationsspezifischen Applet zugeordneten Speicherbereich des ausgewählten Sicherheitselements. Unter Verwendung des öffentlichen kryptographischen Schlüssels der Applikation kann das applikationsspezifischen Applet Signaturen der Applikation prüfen und dieser zuordnen. Mithin kann so eine kryptographische Kopplung der Applikation mit dem installierten Applet implementiert werden.

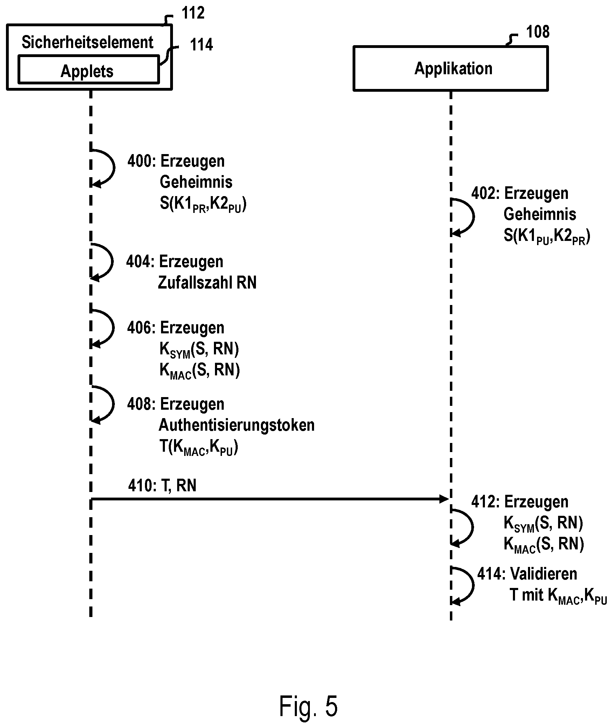

Figur 5 zeigt ein Verfahren für ein initiales Authentifizieren des Applets 114 in dem Sicherheitselement 112 durch die Applikation 108. In Schritt 400 berechnet das Applet 114 ein mit der Applikation geteiltes Geheimnis S unter Verwendung des initialen privaten kryptographischen Schlüssels K1_{PR} des Applets 114 und einem öffentlichen, beispielsweise ephemeren öffentlichen kryptographischen Schlüssel K2_{PU} des Applikation 108. In Schritt 402 berechnet die Applikation 108 ebenfalls das geteilte Geheimnis S. Hierzu verwendet die Applikation 108 beispielsweise den initialen öffentlichen kryptographischen Schlüssels K1_{PU} es Applets und einen privaten, beispielsweise ephemeren privaten kryptographischen Schlüssel K2_{PR} des Applikation 108. In Schritt 404 erzeugt das Applet 114 eine Zufallszahl RN. In Schritt 406 erzeugt das Applet 114 einen Authentisierungsschlüssel K_{MAC}, z.B. einen Schlüssel zum Erzeugen eines MAC-Codes, sowie einen symmetrischen kryptographischen Schlüssel K_{SYM}. Die Schlüssel K_{SYM} und K_{MAC} können beispielsweise zum Verschlüsseln und authentifizieren von Daten verwendet werden. In Schritt 408 erzeugt das Applet 114 einen Authentisierungstoken T unter Verwendung des Authentisierungsschlüssels K_{MAC} und des ephemeren öffentlichen kryptographischen Schlüssels K2_{PU}. In Schritt 410 wird der Authentisierungstoken T zusammen mit der in Schritt 402 erzeugten Zufallszahl RN an die Applikation 108 gesendet. In Schritt 410 verwendet die Applikation 108 die empfangene Zufallszahl RN zusammen mit dem in Schritt 402 berechneten geteilten Geheimnis S zum Berechnen des Authentisierungsschlüssels K_{MAC}, z.B. eines Schlüssels zum Erzeugen eines MAC-Codes, sowie des symmetrischen kryptographischen Schlüssels K_{SYM}. In Schritt 412 wird schließlich der empfangene Authentisierungstoken T von der Applikation 108 unter Verwendung des Schlüssels K_{MAC} und des ephemeren öffentlichen kryptographischen Schlüssels K2_{PU} validiert. Beispielsweise berechnet die Applikation 108 ebenfalls den Authentisierungstoken T und vergleicht das Ergebnis mit dem empfangenen Authentisierungstoken T. Falls beide übereinstimmen ist das Applet authentifiziert.

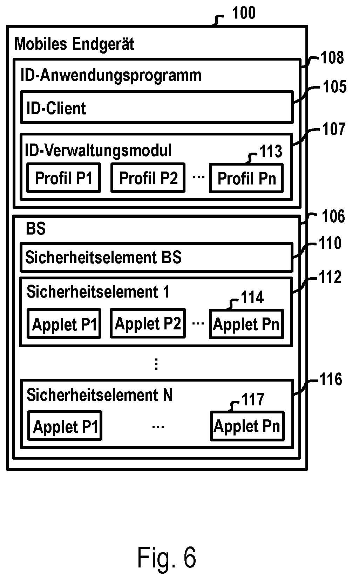

Figur 6 zeigt ein exemplarisches mobiles Endgerät 100, auf welchem ein oder mehrere Anwendungsprogramms 108 gespeichert sind, bei denen es sich beispielsweise um ein ID-Anwendungsprogramme handelt. Ein ID-Anwendungsprogramm 108 verwaltet beispielsweise ein oder mehrere dem Nutzer zugeordnete elektronische Identitäten mit Identitätsattributen. Hierzu umfasst es beispielsweise ein ID-Verwaltungsmodul 107 mit ein oder mehreren Identitäten bzw. ID-Profilen 113. Jeder der elektronischen Identitäten 113 ist beispielsweise jeweils ein unabhängiges Sicherheitsapplet 114 in einem Sicherheitselement 112 des mobilen Endgeräts 100 zugeordnet. Beispielsweise sind ein oder mehreren der Identitäten 113 Sicherheitsapplets 117 in weiteren Sicherheitselementen 112 des mobilen Endgeräts 100 zugeordnet, d.h. diese elektronischen Identitäten 113 können zur Nutzung auf applikationsspezifische kryptographische Sicherheitsfunktionen unterschiedlicher Sicherheitselemente 112, 116 zurückgreifen. Jeder der elektronischen Identitäten 113 ist jeweils ein Satz von ein oder mehreren Identitätsattributen zugeordnet. Diese Identitätsattribute sind beispielsweise jeweils verschlüsselt in einem Speicher des mobilen Endgeräts 100 gespeichert. Die kryptographischen Schlüssel zum Entschlüsseln der verschlüsselten Identitätsattribute sind in diesem Fall beispielswese jeweils in den entsprechenden Sicherheitsapplets 114, 117 gespeichert sind. Das ID-Anwendungsprogramm 108 umfasst ferner beispielsweise ein ID-Clientmodul 105, über welches das ID-Anwendungsprogramm 108 beispielsweise Anfragen nach Identitätsattributen eines der ID-Profile 113 von einem auslesenden Computersystem empfangen kann. In Antwort auf die Anfrage, beispielsweise durch einen ID-Provider-Service über ein Netzwerk, kann das ID-Anwendungsprogramm 108 nach einer erfolgreichen zentralen Authentifizierung des auslesenden Computersystems die angefragten Identitätsattribute unter der Voraussetzung einer Zustimmung des Nutzers zur Verfügung stellen. Hierfür kann eine Nutzerauthentifizierung gegenüber dem ID-Anwendungsprogramm 108 notwendig sein bzw. kann ein Nachweis einer erfolgreichen Nutzerauthentifizierung durch das ID-Anwendungsprogramm 108 mittels eines Challenge-Response-Verfahrens notwendig sein. Hierzu wird ein dem Betriebssystem 106 zugeordnetes Sicherheitselement 110 verwendet. Dieses führt beispielsweise eine Nutzerauthentifizierung mit einem Authentifizierungssensor des mobilen Endgeräts 100 aus und bestätigt dem Sicherheitselement 112 die erfolgreiche Nutzerauthentifizierung. Diese gilt beispielsweise zugleich als Zustimmung des Nutzers zu einem Auslesen der angefragten Identitätsattribute. Beispielsweise kann der Nutzer die Möglichkeit haben über eine Nutzerschnittstelle die Auswahl der zum Auslesen zur Verfügung gestellten Identitätsattribute zu beeinflussen, z.B. zu ändern.

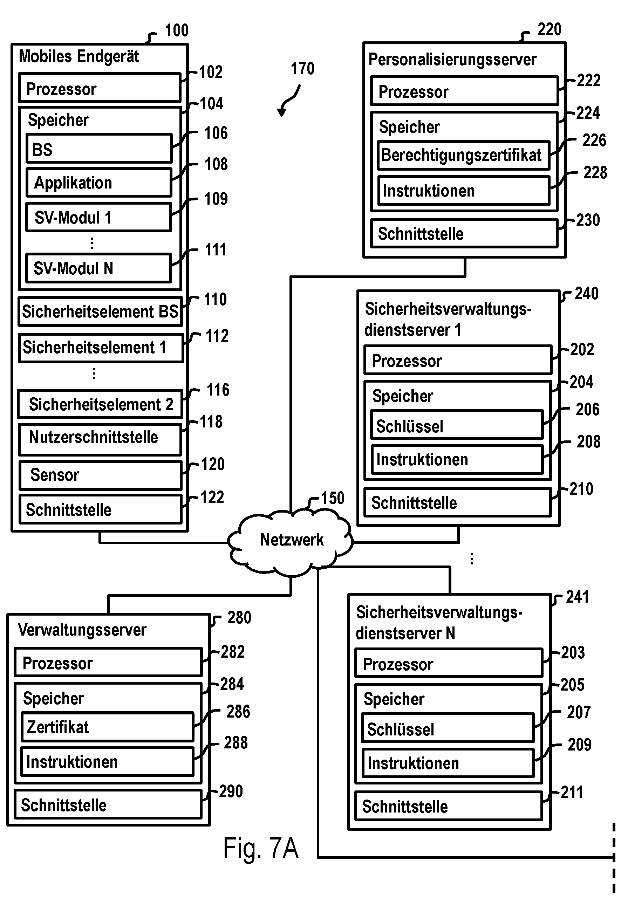

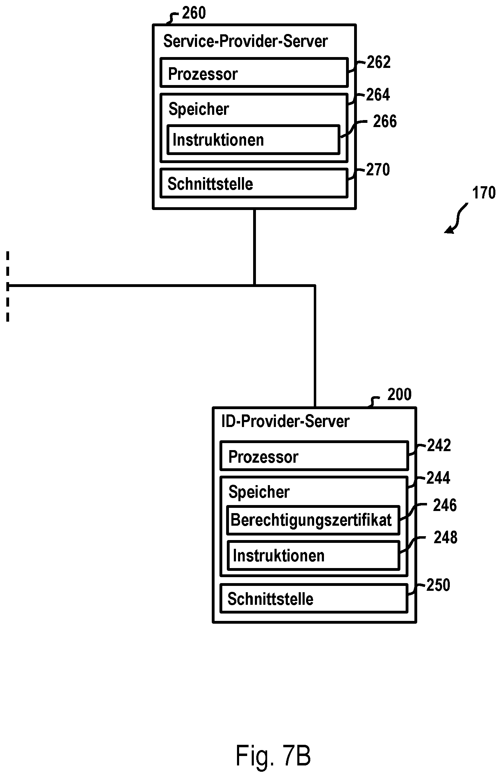

Figur 7 zeigt ein exemplarisches System 170, welches beispielsweise ein mobiles Endgerät 100 umfasst, das über ein Netzwerk 150, beispielsweise das Internet, mit einer Mehrzahl von Sicherheitsverwaltungsdienstservern 240, 241, einem Personalisierungsserver 220, einem Verwaltungsserver 280, einem ID-Provider-Server 200 und/oder einem Service-Provider-Server 260 verbunden ist. Beispielsweise umfasst das System 170 eine Mehrzahl von Sicherheitsverwaltungsdienstservern 240, 241. Jeder der Sicherheitsverwaltungsdienstserver 240, 241 verwaltet beispielsweise eines der Sicherheitselemente 112, 116 des mobilen Endgeräts 100. Beispielsweise verwaltet der Sicherheitsverwaltungsdienstserver 240 das Sicherheitselemente 112 des mobilen Endgeräts 100. Dem Sicherheitsverwaltungsdienstserver 240 ist beispielsweise das Sicherheitsverwaltungsprogrammmodul 109 des mobilen Endgeräts 100 zugeordnet. Soll ein Applet für die Applikation 108 in dem Sicherheitselemente 112 installiert werden, wird dies beispielsweise über das Sicherheitsverwaltungsprogrammmodul 109 unter Verwendung des Sicherheitsverwaltungsdienstserver 240 ausgeführt. Beispielsweise verwaltet der Sicherheitsverwaltungsdienstserver 241 das Sicherheitselemente 116 des mobilen Endgeräts 100. Dem Sicherheitsverwaltungsdienstserver 241 ist beispielsweise das Sicherheitsverwaltungsprogrammmodul 111 des mobilen Endgeräts 100 zugeordnet. Soll ein Applet für die Applikation 108 in dem Sicherheitselemente 116 installiert werden, wird dies beispielsweise über das Sicherheitsverwaltungsprogrammmodul 111 unter Verwendung des Sicherheitsverwaltungsdienstserver 241 ausgeführt. Die Sicherheitsverwaltungsdienstserver 240, 241 umfassen beispielsweise jeweils einen Prozessor 202, 203, einen Speicher 204, 205 und eine Kommunikationsschnittstelle 210, 211. In dem Speicher 204, 205 sind Programminstruktionen 208, 209 gespeichert, bei deren Ausführung der Prozessor 202, 203 den Sicherheitsverwaltungsdienstserver 240, 241 zum Initialisieren eines Applets in dem Sicherheitselement 112, 113 des mobile Endgeräts 100 steuert, welches der entsprechende Sicherheitsverwaltungsdienst verwaltet. Das Applet ist beispielsweise einer Applikation 108 des mobilen Endgeräts bzw. einer von der entsprechenden Applikation verwaltenden elektronischen Identität zugeordnet. Zum Nachweis einer Schreibberechtigung zum Installieren des Applets verwendet der Sicherheitsverwaltungsdienstserver 240, 241 beispielsweise einen sicherheitsverwaltungsdienstspezifischen kryptographischen Schlüssel 206, 207.

Der Verwaltungsserver 280 zum Verwalten der Applikation 108 umfasst beispielsweise einen Prozessor 282, einen Speicher 284 und eine Kommunikationsschnittstelle 290. In dem Speicher 284 sind Programminstruktionen 288 gespeichert, bei deren Ausführung der Prozessor 282 den Verwaltungsserver 280 zum Verwalten der Applikation 108. Das Verwalten der Applikation 108 umfasst beispielsweise ein Bereitstellen eines Zertifikats 286 der Applikation 108, welches einen öffentlichen kryptographischen Schlüssel der Applikation 108 und beispielsweise einen eindeutigen Identifikator der Applikation 108 umfasst. Beispielsweise empfängt der Verwaltungsserver 280 eine Zertifikatsanfrage der Applikation 108 über das Netzwerk 150. Die Zertifizierungsanfrage umfasst beispielsweise den öffentlichen kryptographischen Schlüssel der Applikation 108 und den eindeutigen Identifikator der Applikation 108. Der Verwaltungsserver 280 stellt beispielsweise eine entsprechende Zertifikatsanfrage an einen Zertifizierungsserver oder ist selbst als Zertifizierungsserver konfiguriert. Auf die Zertifikatsanfrage des Verwaltungsserver 280 erzeugt der Zertifizierungsserver das Zertifikat 286 der Applikation 108. Dieses wird von dem Zertifizierungsserver für die Applikation 108 bereitgestellt. Hierzu sendet der Zertifizierungsserver das Zertifikat 286 beispielsweise an den anfragenden Verwaltungsserver 280, welcher das Zertifikat 286 in Antwort auf die Zertifikatsanfrage der Applikation 108 an die Applikation 108 sendet.

Der Personalisierungsserver 220 umfasst beispielsweise einen Prozessor 222, einen Speicher 224 und eine Kommunikationsschnittstelle 230. In dem Speicher 224 sind Programminstruktionen 228 gespeichert, bei deren Ausführung der Prozessor 222 den Personalisierungsserver 220 zum Bereitstellen eines symmetrischen Schlüssels für ein Challenge-Response-Verfahren zwischen den Sicherheitselementen 110 und 112, 116 des mobile Endgerät 100 steuert. Somit kann das initialisierte Applet an das eine Nutzerauthentifizierung unter Verwendung des Sensors 120 ausführende Sicherheitselement 110 und damit an den Nutzer des mobilen Endgeräts 100 gekoppelt werden. Zum Nachweis einer Schreibberechtigung zum Schreiben des symmetrischen Schlüssels in einen dem Applet zugeordneten Speicherbereich des Sicherheitselements 112 des mobile Endgeräts 100, d.h. die Sub-Security-Domain des Applets, verwendet der Personalisierungsserver 220 beispielsweise das Berechtigungszertifikat 226.

Der Service-Provider-Server 260 umfasst beispielsweise einen Prozessor 262, einen Speicher 264 und eine Kommunikationsschnittstelle 270. In dem Speicher 264 sind Programminstruktionen 268 gespeichert, bei deren Ausführung der Prozessor 262 den Service-Provider-Server 260 zum Bereitstellen von Dienstleistungen steuert, welche beispielsweise von dem mobilen Endgerät 100 über das Netzwerk 150 angefragt und/oder genutzt werden können. Eine Inanspruchnahme von Dienstleistungen des Service-Provider-Server 260 setzt beispielsweise ein Bereitstellen und/oder Nachweis eines oder mehrerer Identitätsattribute des Nutzers voraus. Auf eine Anfrage einer Dienstleistung des Service-Provider-Servers 260 durch das mobile Endgerät 100 sendet das Service-Provider-Servers 260 eine Identitätsattributsanfrage zum Auslesen von Identitätsattributen des Nutzers des mobilen Endgeräts 100 an einen ID-Provider-Server 200. Die Identitätsattributsanfrage kann von dem Service-Provider-Servers 260 beispielsweise direkt oder über das mobile Endgerät 100 an den ID-Provider-Server 200 gesendet werden. Bei den auszulesenden Identitätsattributen handelt es sich beispielsweise um Identitätsattribute verschiedener auf dem mobilen Endgerät 100 gespeicherter elektronischer Identitäten.

Der ID-Provider-Server 200 umfasst beispielsweise einen Prozessor 242, einen Speicher 244 und eine Kommunikationsschnittstelle 250. In dem Speicher 244 sind Programminstruktionen 248 gespeichert, bei deren Ausführung der Prozessor 242 den Service-Provider-Server 260 zum Auslesen der in der Identitätsattributsanfrage spezifizierten Identitätsattribute aus einem Speicher des mobilen Endgeräts 100. Hierzu baut der ID-Provider-Server 200 einen kryptographisch gesicherten Kommunikationskanal mit dem mobilen Endgerät 100 auf. Bei dem kryptographisch gesicherten Kommunikationskanal kann es sich beispielsweise um einen Ende-zu-Ende-verschlüsselten Kommunikationskanal handeln. Beispielsweise setzt dies eine gegenseitiges Authentifizieren von dem ID-Provider-Server 200 als auslesendem Computersystem und den die elektronischen Identitäten verwaltenden Applikationen 108 bzw. den entsprechenden elektronischen Identitäten voraus. Für einen Lesezugriff auf die auszulesenden Identitätsattribute verwendet der ID-Provider-Server 200 die Applikationen 108 auf dem mobilen Endgerät 100, welches die elektronischen Identitäten mit den auszulesenden Identitätsattribute verwalten. Der ID-Provider-Server 200 als auslesendes Computersystem sendet eine entsprechende Zugriffsanfrage an das mobile Endgerät 100. Eine Leseberechtigung zum Auslesen der in der Identitätsattributsanfrage spezifizierten Identitätsattribute weist der ID-Provider-Server 200 beispielsweise mit dem Berechtigungszertifikat 246 nach. Das Berechtigungszertifikat 246 sendet das ID-Provider-Server 200 beispielsweise zusammen mit der Zugriffsanfrage. Das empfangene Berechtigungszertifikat 246 wird von dem mobilen Endgerät 100 beispielsweise im Zuge einer zentralen Authentifizierung validiert. Ferner setzt ein Lesezugriff des ID-Provider-Server 200 auf die in der Identitätsattributsanfrage spezifizierten Identitätsattribute beispielsweise eine Zustimmung des Nutzers des mobilen Endgeräts 100 voraus. Hierzu muss sich der Nutzer gegenüber dem ID-Anwendungsprogramm 108 erfolgreich authentisieren. Das mobile Endgerät 100 authentifiziert den Nutzer beispielsweise unter Verwendung des Sensors 120 und des Sicherheitselements 110 des Betriebssystems 106. Das Sicherheitselements 110 bestätigt dem Sicherheitselement 112 bzw. von diesem umfassten Applets die erfolgreiche Authentifizierung des Nutzers. Dies kann beispielsweise unter Verwendung eines Challenge-Response-Verfahrens erfolgen. Beispielsweise wird dem Nutzer über eine Anzeigevorrichtung der Nutzerschnittstelle 118 angezeigt, welche Identitätsattribut an den ID-Provider-Server 200 gesendet werden sollen, und dem Nutzer ermöglicht diese Auswahl zu bearbeiten. Beispielsweise kann der Nutzer selektieren, welche der angefragten Identitätsattribute tatsächlich gesendet werden. Auf einen erfolgreichen Nachweis der Leseberechtigung bzw. Authentifizierung des ID-Provider-Server 200 und eine erfolgreiche Nutzerauthentifizierung werden dem ID-Provider-Server 200 die freigegebenen Identitätsattribute zugesendet. Der ID-Provider-Server 200 signiert beispielsweise die empfangenen Identitätsattribute und sendet diese an den Service-Provider-Server 260.

### Bezugszeichenliste

- 100: mobiles Endgerät
- 102: Prozessor
- 104: Speicher
- 105: ID-Client
- 106: Betriebssystem
- 107: ID-Verwaltungsmodul
- 108: Applikation
- 109: Sicherheitsverwaltungsprogrammmodul
- 110: Sicherheitselement
- 111: Sicherheitsverwaltungsprogrammmodul
- 112: Sicherheitselement
- 114: Applet
- 116: Sicherheitselement
- 117: Applet
- 118: Nutzerschnittstelle
- 120: Authentifizierungssensor
- 122: Kommunikationsschnittstelle
- 150: Netzwerk
- 170: System
- 200: Sicherheitsverwaltungsdienstserver
- 202: Prozessor
- 203: Prozessor
- 204: Speicher
- 205: Speicher
- 206: kryptographischer Schlüssel
- 207: kryptographischer Schlüssel
- 208: Programminstruktionen
- 209: Programminstruktionen
- 210: Kommunikationsschnittstelle
- 211: Kommunikationsschnittstelle
- 220: Personalisierungsserver
- 222: Prozessor
- 224: Speicher
- 226: Berechtigungszertifikat
- 228: Programminstruktionen
- 230: Kommunikationsschnittstelle
- 240: Sicherheitsverwaltungsdienstserver
- 241: Sicherheitsverwaltungsdienstserver
- 242: Prozessor
- 244: Speicher
- 246: Berechtigungszertifikat
- 248: Programminstruktionen
- 250: Kommunikationsschnittstelle
- 260: Service-Provider-Server
- 262: Prozessor
- 264: Speicher
- 266: Programminstruktionen
- 270: Kommunikationsschnittstelle
- 280: Verwaltungsserver
- 282: Prozessor
- 284: Speicher
- 286: Zertifikat
- 288: Programminstruktionen
- 290: Kommunikationsschnittstelle

## Patentansprüche

1. Verfahren zum Initialisieren applikationsspezifischer kryptographischer Sicherheitsfunktionen für eine mobile Applikation (108) auf einem mobilen Endgerät (100), wobei das mobile Endgerät (100) eine Mehrzahl von zum Bereitstellen der applikationsspezifischen kryptographischen Sicherheitsfunktionen für die mobile Applikation (108) verwendbaren Sicherheitselementen (112, 116) umfasst, welche jeweils von einem externen Sicherheitsverwaltungsdienst verwaltet werden,
wobei auf dem mobilen Endgerät (100) für jeden der externen Sicherheitsverwaltungsdienste der Mehrzahl von Sicherheitsverwaltungsdiensten jeweils ein lokales Sicherheitsverwaltungsprogrammmodul (109, 111) installiert ist,
wobei das Verfahren umfasst:
• Installieren der mobilen Applikation (108) auf dem mobilen Endgerät (100),
• Ermitteln der auf dem mobilen Endgerät (100) zur Verfügung stehenden und zum Bereitstellen der applikationsspezifischen kryptographischen Sicherheitsfunktionen für die mobile Applikation (108) verwendbaren Mehrzahl von Sicherheitselementen (112, 116) und der die entsprechenden Sicherheitselemente (112, 116) jeweils verwaltenden Sicherheitsverwaltungsdienste durch die installierte Applikation (108),
• Auswahl zumindest eines Sicherheitselements (112, 116) aus der ermittelten Mehrzahl von Sicherheitselementen (112, 116) und des zumindest einen Sicherheitsverwaltungsdienstes, welcher das ausgewählte Sicherheitselement (112, 116) verwaltet,
• Senden einer ersten Initialisierungsanfrage von der Applikation (108) an das zumindest eine auf dem mobilen Endgerät (100) installierte Sicherheitsverwaltungsprogrammmodul (109, 111) des ausgewählten Sicherheitsverwaltungsdienstes zum Implementieren der applikationsspezifischen kryptographischen Sicherheitsfunktionen für die Applikation (108) in dem ausgewählten Sicherheitselement (112, 116),
• Senden einer zweiten Initialisierungsanfrage von dem die erste Initialisierungsanfrage empfangenden Sicherheitsverwaltungsprogrammmodul (109, 111) über ein Netzwerk (150) an einen Server (240, 241) des ausgewählten Sicherheitsverwaltungsdienstes zum Implementieren der applikationsspezifischen kryptographischen Sicherheitsfunktionen für die Applikation (108) auf dem ausgewählten Sicherheitselement (112, 116),
• Aufbau eines ersten verschlüsselten Kanals zwischen dem ausgewählten Sicherheitselement (112, 116) und dem Server (240, 241) des ausgewählten Sicherheitsverwaltungsdienstes unter Verwendung eines kryptographischen Schlüssels des Sicherheitsverwaltungsdienstes, wobei der kryptographische Schlüssel des Sicherheitsverwaltungsdienstes einen dem Sicherheitsverwaltungsdienst vorbehaltenen Schreibzugriff auf das von dem Sicherheitsverwaltungsdienst verwaltete Sicherheitselement (112, 116) nachweist,
• Installieren eines der Applikation (108) zugeordneten applikationsspezifischen Applets (114, 117) in dem ausgewählten Sicherheitselement (112, 116) durch den Server (240, 241) des ausgewählten Sicherheitsverwaltungsdienstes über den verschlüsselten ersten Kanal, wobei das Applet (114, 117) die applikationsspezifischen kryptographischen Sicherheitsfunktionen für die Applikation (108) bereitstellt,
• kryptographisches Koppeln der Applikation (108) mit dem installierten Applet (114, 117) zum Freischalten einer Nutzung der von dem Applet (114, 117) bereitgestellten applikationsspezifischen kryptographischen Sicherheitsfunktionen für die Applikation (108).

2. Verfahren nach Anspruch 1, wobei mehrere Sicherheitselementen (112, 116) aus der ermittelten Mehrzahl von Sicherheitselementen (112, 116) und die jeweils zugeordneten Sicherheitsverwaltungsdienste, welche die mehreren ausgewählten Sicherheitselemente (112, 116) verwalten, ausgewählt werden,
wobei die mehreren ausgewählten Sicherheitselementen (112, 116) beispielsweise jeweils von demselben Sicherheitsverwaltungsdienst verwaltet werden, oder
wobei beispielsweise zumindest ein Teil der mehreren ausgewählten Sicherheitselementen von unterschiedlichen Sicherheitsverwaltungsdiensten verwaltet wird.

3. Verfahren nach Anspruch 2, wobei erste Initialisierungsanfragen für alle ausgewählten Sicherheitselemente (112, 116) von der Applikation (108) jeweils an das Sicherheitsverwaltungsprogrammmodul (109, 111) jedes ausgewählten Sicherheitsverwaltungsdienstes gesendet werden zum Implementieren der applikationsspezifischen kryptographischen Sicherheitsfunktionen für die Applikation (108) in dem jeweiligen ausgewählten Sicherheitselement (112, 116), wobei zweite Initialisierungsanfragen von den entsprechenden Sicherheitsverwaltungsprogrammmodulen (109, 111) der ausgewählten Sicherheitsverwaltungsdienste über ein Netzwerk (150) an Server (240, 241) des ausgewählten Sicherheitsverwaltungsdienste gesendet werden, wobei zwischen jedem der ausgewählten Sicherheitselemente (112, 116) und dem Server (240, 241) des jeweiligen Sicherheitsverwaltungsdienstes, welcher das entsprechende ausgewählte Sicherheitselemente (112, 116) verwalten, jeweils unter Verwendung eines kryptographischen Schlüssels des entsprechenden Sicherheitsverwaltungsdienst ein erster verschlüsselter Kanal aufgebaut und über den entsprechenden Kanal ein der Applikation (108) zugeordnetes applikationsspezifisches Applets (114, 117) in dem entsprechenden ausgewählten Sicherheitselement (112, 116) durch den Server (240, 241) des entsprechenden Sicherheitsverwaltungsdienstes installiert wird, wobei die Applikation (108) mit jedem der installierten Applets (114, 117) jeweils kryptographisch gekoppelt wird zum Freischalten einer Nutzung der von dem entsprechenden Applet (114, 117) bereitgestellten applikationsspezifischen kryptographischen Sicherheitsfunktionen für die Applikation (108).

4. Verfahren nach Anspruch einem der vorangehenden Ansprüche, wobei die Auswahl der ein oder mehreren Sicherheitselemente (112, 116) und Sicherheitsverwaltungsdienste, welche die entsprechenden Sicherheitselemente (112, 116) verwalten, unter Verwendung einer vordefinierten Zusammenstellung von mit der Applikation (108) kompatiblen Kombinationen aus Sicherheitselementen (112, 116) und zugehörigen Sicherheitsverwaltungsdiensten erfolgt, welche über der Applikation (108) zugeordnete applikationsspezifische Applets (114, 117) zum Installieren in dem entsprechenden Sicherheitselement (112, 116) verfügen.

5. Verfahren nach Anspruch 4, wobei die Auswahl der ein oder mehreren Sicherheitselemente (112, 116) und Sicherheitsverwaltungsdienste ferner umfasst:
• Ausgeben der ermittelten Sicherheitselemente (112, 116) und Sicherheitsverwaltungsdienste, welche gemäß der vordefinierten Zusammenstellung kompatibel sind, auf einer Anzeigevorrichtung des Endgeräts (100),
• Empfang einer Nutzereingabe mit der Auswahl über eine Eingabevorrichtung des Endgeräts (100), wobei die Auswahl ein oder mehreren Sicherheitselemente (112, 116) und Sicherheitsverwaltungsdienste aus den ausgebenden Sicherheitselemente (112, 116) und Sicherheitsverwaltungsdienste auswählt, und/oder
wobei die Zusammenstellung einer Rangfolge für die Kombinationen von kompatiblen Sicherheitselemente (112, 116) und Sicherheitsverwaltungsdienste definiert und die Auswahl unter Berücksichtigung der entsprechenden Rangfolge erfolgt,
wobei die Auswahl beispielsweise zumindest die ermittelte Kombination von kompatiblem Sicherheitselement (112, 116) und Sicherheitsverwaltungsdienst umfasst, welcher von den ermittelten Kombinationen der höchste Rang gemäß der Rangfolge zugeordnet ist, und/oder
wobei die Auswahl obligatorisch zumindest zwei Sicherheitselemente (112, 116) umfasst, welche von zwei unterschiedliche Sicherheitsverwaltungsdienste verwaltet werden, und/oder zumindest zwei Sicherheitselemente (112, 116), welche von demselben Sicherheitsverwaltungsdienst verwaltet werden.

6. Verfahren nach einem der vorangehenden Ansprüche, wobei das kryptographische Koppeln ein initiales Authentifizieren des installierten Applets (114, 117) durch die Applikation (108) umfasst.

7. Verfahren nach Anspruch 6, wobei das Verfahren ein Erzeugen eines asymmetrischen Schlüsselpaars für die Applikation (108) umfasst, wobei das asymmetrischen Schlüsselpaar der Applikation (108) einen öffentlichen kryptographischen Schlüssel und einen privaten kryptographischen Schlüssel der Applikation (108) umfasst.

8. Verfahren nach Anspruch 7, wobei das Verfahren ferner ein Bereitstellen eines Zertifikats (286) der Applikation (108) umfasst, wobei das Zertifikat (286) der Applikation (108) den öffentlichen kryptographischen Schlüssel der Applikation (108) und einen eindeutigen Identifikator der Applikation (108) umfasst,
wobei das Bereitstellen des Zertifikats der Applikation (108) beispielsweise umfasst:
• Senden einer Zertifikatsanfrage von der Applikation (108) über das Netzwerk (150) an einen Verwaltungsserver (280) zum Verwalten der Applikation (108), wobei die Zertifizierungsanfrage den öffentlichen kryptographischen Schlüssel der Applikation (108) und den eindeutigen Identifikator der Applikation (108) umfasst,
• In Antwort auf die Zertifikatsanfrage, Empfangen des Zertifikats (286) der Applikation (108) von dem Zertifizierungsserver durch die Applikation (108).

9. Verfahren nach einem der Ansprüche 7 bis 8, wobei das kryptographische Koppeln der Applikation (108) mit dem installierten Applet (114, 117) umfasst:
• Senden einer ersten Kopplungsanfrage von der Applikation (108) an das Sicherheitsverwaltungsprogrammmodul (109, 111) des ausgewählten Sicherheitsverwaltungsdienstes,
• Senden einer zweiten Kopplungsanfrage von dem die erste Kopplungsanfrage empfangenden Sicherheitsverwaltungsprogrammmodul (109, 111) über das Netzwerk (150) an den Server (240, 241) des ausgewählten Sicherheitsverwaltungsdienstes,
• Aufbau eines zweiten verschlüsselten Kanals zwischen dem ausgewählten Sicherheitselement (112, 116) und dem Server (240, 241) des ausgewählten Sicherheitsverwaltungsdienstes unter Verwendung des kryptographischen Schlüssels des Sicherheitsverwaltungsdienstes,
• Schreiben des öffentlichen kryptographischen Schlüssels der Applikation (108) in einen dem applikationsspezifischen Applet (114, 117) zugeordneten Speicherbereich des ausgewählten Sicherheitselements (112, 116) durch den Server (240, 241) des ausgewählten Sicherheitsverwaltungsdienstes über den zweiten verschlüsselten Kanal.

10. Verfahren nach Anspruch 9, wobei das kryptographische Koppeln ferner ein Schreiben eines initialen asymmetrischen Schlüsselpaars des applikationsspezifischen Applets (114, 117) in den dem applikationsspezifischen Applet (114, 117) zugeordneten Speicherbereich des ausgewählten Sicherheitselements (112, 116) durch den Server (240, 241) des ausgewählten Sicherheitsverwaltungsdienstes über den zweiten verschlüsselten Kanal umfasst, wobei das initialen asymmetrischen Schlüsselpaars des Applets (114, 117) einen initialen öffentlichen kryptographischen Schlüssel und einen initialen privaten kryptographischen Schlüssel umfasst, oder
wobei das Initialisieren der kryptographischen Kopplung ferner ein Erzeugen des initialen asymmetrischen Schlüsselpaars des applikationsspezifischen Applets (114, 117) mit dem initialen öffentlichen kryptographischen Schlüssel und dem initialen privaten kryptographischen Schlüssel durch das Applet (114, 117) umfasst.

11. Verfahren nach Anspruch 10, wobei das Verfahren ferner ein Empfangen des initialen öffentlichen kryptographischen Schlüssels des applikationsspezifischen Applets (114, 117) durch die Applikation (108) von dem Sicherheitsverwaltungsprogrammmodul (109, 111) umfasst.

12. Verfahren nach einem der Ansprüche 6 bis 11, wobei das initiale Authentifizieren des Applets (114, 117) durch die Applikation (108) umfasst:
• Berechnen eines geteilten Geheimnisses durch das Applet (114, 117) unter Verwendung des initialen privaten kryptographischen Schlüssels des Applets (114, 117) und des öffentlichen kryptographischen Schlüssels der Applikation (108),
• Berechnen des geteilten Geheimnisses durch die Applikation (108) unter Verwendung des privaten kryptographischen Schlüssels der Applikation (108) und des initialen öffentlichen kryptographischen Schlüssels des Applets (114, 117),
• Erzeugen einer Zufallszahl durch das Applet (114, 117),
• Erzeugen eines gemeinsamen Authentisierungsschlüssels zum Authentisieren von Informationen im Zuge der Kommunikation zwischen Applikation (108) und Applet (114, 117) durch das Applet (114, 117) unter Verwendung des geteilten Geheimnisses und der erzeugten Zufallszahl,
• Erzeugen eines Authentisierungstoken durch das Applet (114, 117) unter Verwendung des Authentisierungsschlüssels und des öffentlichen kryptographischen Schlüssels der Applikation (108) zum Authentisieren des Applets (114, 117) gegenüber der Applikation (108),
• Senden der Zufallszahl zusammen mit dem Authentisierungstoken von dem Applet (114, 117) an die Applikation (108),
• Erzeugen des gemeinsamen Authentisierungsschlüssels durch die Applikation (108) unter Verwendung des geteilten Geheimnisses und der empfangenen Zufallszahl,
• Authentifizieren der empfangenen Zufallszahl und des Applets (114, 117) durch Verifizieren des empfangenen Authentisierungstokens durch die Applikation (108) unter Verwendung des erzeugten gemeinsamen Authentisierungsschlüssels und des öffentlichen kryptographischen Schlüssels der Applikation (108),
wobei das kryptographische Koppeln beispielsweise ferner ein Erzeugen eines gemeinsamen symmetrischen kryptographischen Schlüssels durch das Applet (114, 117) und durch die Applikation (108) zum Verschlüsseln der Kommunikation zwischen Applikation (108) und Applet (114, 117) unter Verwendung des geteilten Geheimnisses und der Zufallszahl umfasst.

13. Mobiles Endgerät (100) umfassend einen Prozessor (102), eine Kommunikationsschnittstelle (122) zur Kommunikation über ein Netzwerk (150) und eine Mehrzahl von Sicherheitselementen (112, 116), wobei die Sicherheitselemente (112, 116) jeweils zum Bereitstellen der applikationsspezifischen kryptographischen Sicherheitsfunktionen für mobile Applikation (108) verwendbar sind und jeweils von einem externen Sicherheitsverwaltungsdienst verwaltet werden,
wobei auf dem mobilen Endgerät (100) für jeden der externen Sicherheitsverwaltungsdienste der Mehrzahl von Sicherheitsverwaltungsdiensten jeweils ein lokales Sicherheitsverwaltungsprogrammmodul (109, 111) installiert ist,
wobei der Prozessor (102) dazu konfiguriert ist ein Verfahren zum Initialisieren applikationsspezifischer kryptographischer Sicherheitsfunktionen für eine mobile Applikation (108) auf einem mobilen Endgerät (100) auszuführen, welches umfasst:
• Installieren der mobilen Applikation (108) auf dem mobilen Endgerät (100),
• Ermitteln der auf dem mobilen Endgerät (100) zur Verfügung stehenden und zum Bereitstellen der applikationsspezifischen kryptographischen Sicherheitsfunktionen für die mobile Applikation (108) verwendbaren Mehrzahl von Sicherheitselementen (112, 116) und der die entsprechenden Sicherheitselemente (112, 116) jeweils verwaltenden Sicherheitsverwaltungsdienste durch die installierte Applikation (108),
• Auswahl zumindest eines Sicherheitselements (112, 116) aus der ermittelten Mehrzahl von Sicherheitselementen (112, 116) und des zumindest einen Sicherheitsverwaltungsdienstes, welcher das ausgewählte Sicherheitselement (112, 116) verwaltet,
• Senden einer ersten Initialisierungsanfrage von der Applikation (108) an das zumindest eine auf dem mobilen Endgerät (100) installierte Sicherheitsverwaltungsprogrammmodul (109, 111) des ausgewählten Sicherheitsverwaltungsdienstes zum Implementieren der applikationsspezifischen kryptographischen Sicherheitsfunktionen für die Applikation (108) in dem ausgewählten Sicherheitselement (112, 116),
• Senden einer zweiten Initialisierungsanfrage von dem die erste Initialisierungsanfrage empfangenden Sicherheitsverwaltungsprogrammmodul (109, 111) über ein Netzwerk (150) an einen Server (240, 241) des ausgewählten Sicherheitsverwaltungsdienstes zum Implementieren der applikationsspezifischen kryptographischen Sicherheitsfunktionen für die Applikation (108) auf dem ausgewählten Sicherheitselement (112, 116),
• Aufbau eines ersten verschlüsselten Kanals zwischen dem ausgewählten Sicherheitselement (112, 116) und dem Server (240, 241) des ausgewählten Sicherheitsverwaltungsdienstes unter Verwendung eines kryptographischen Schlüssels des Sicherheitsverwaltungsdienstes, wobei der kryptographische Schlüssel des Sicherheitsverwaltungsdienstes einen dem Sicherheitsverwaltungsdienst vorbehaltenen Schreibzugriff auf das von dem Sicherheitsverwaltungsdienst verwaltete Sicherheitselement (112, 116) nachweist,
• Installieren eines der Applikation (108) zugeordneten applikationsspezifischen Applets (114, 117) in dem ausgewählten Sicherheitselement (112, 116) durch den Server (240, 241) des ausgewählten Sicherheitsverwaltungsdienstes über den verschlüsselten ersten Kanal, wobei das Applet (114, 117) die applikationsspezifischen kryptographischen Sicherheitsfunktionen für die Applikation (108) bereitstellt,
• kryptographisches Koppeln der Applikation (108) mit dem installierten Applet (114, 117) zum Freischalten einer Nutzung der von dem Applet (114, 117) bereitgestellten applikationsspezifischen kryptographischen Sicherheitsfunktionen für die Applikation (108).

14. System (170) umfassend ein mobiles Endgerät (100) nach Anspruch 13 und ein oder mehrere Server (240, 241) der ein oder mehreren ausgewählten Sicherheitsverwaltungsdienste zum Verwalten der ausgewählten ein oder mehreren Sicherheitselemente (112, 116) des mobilen Endgeräts (100).

15. System (170) nach Anspruch 14, wobei das System (170) ferner einen Verwaltungsserver (280) zum Verwalten der Applikation (108) umfasst.

## Claims

1. A method for initializing application-specific cryptographic security functions for a mobile application (108) on a mobile terminal device (100), wherein the mobile terminal device (100) comprises a plurality of security elements (112, 116) which can be used to provide the application-specific cryptographic security functions for the mobile application (108) and are each managed by an external security management service,
wherein, for each of the external security management services of the plurality of security management services, a local security management program module (109, 111) is installed on the mobile terminal device (100),
wherein the method comprises:
• installing the mobile application (108) on the mobile terminal device (100),
• identifying, by means of the installed application (108), the plurality of security elements (112, 116) which are available on the mobile terminal device (100) and can be used to provide the application-specific cryptographic security functions for the mobile application (108) and identifying the security management services which each manage the corresponding security elements (112, 116),
• selecting at least one security element (112, 116) from the identified plurality of security elements (112, 116) and the at least one security management service which manages the selected security element (112, 116),
• sending a first initialization request from the application (108) to the at least one security management program module (109, 111), installed on the mobile terminal device (100), of the selected security management service for the implementation of the application-specific cryptographic security functions for the application (108) in the selected security element (112, 116),
• sending a second initialization request from the security management program module (109, 111) receiving the first initialization request to a server (240, 241) of the selected security management service, over a network (150), for the implementation of the application-specific cryptographic security functions for the application (108) in the selected security element (112, 116),
• establishing a first encrypted channel between the selected security element (112, 116) and the server (240, 241) of the selected security management service using a cryptographic key of the security management service, wherein the cryptographic key of the security management service verifies that write access to the security element (112, 116) managed by the security management service is reserved for the security management service,
• installing an application-specific applet (114, 117) associated with the application (108) in the selected security element (112, 116) by means of the server (240, 241) of the selected security management service over the encrypted first channel, wherein the applet (114, 117) provides the application-specific cryptographic security functions for the application (108),
• cryptographically coupling the application (108) to the installed applet (114, 117) in order to enable use of the application-specific cryptographic security functions for the application (108) which are provided by the applet (114, 117).

2. The method according to claim 1, wherein a plurality of security elements (112, 116) are selected from the identified plurality of security elements (112, 116) and the respectively associated security management services which manage the plurality of selected security elements (112, 116),
wherein the plurality of selected security elements (112, 116) are each managed by the same security management service, for example, or
wherein, for example, at least some of the plurality of selected security elements are managed by different security management services.

3. The method according to claim 2, wherein first initialization requests for all the selected security elements (112, 116) are each sent by the application (108) to the security management program module (109, 111) of each selected security management service for the implementation of the application-specific cryptographic security functions for the application (108) in the respective selected security element (112, 116), wherein second initialization requests are sent by the corresponding security management program modules (109, 111) of the selected security management services over a network (150) to servers (240, 241) of the selected security management services, wherein a first encrypted channel is set up between each of the selected security elements (112, 116) and the server (240, 241) of the respective security management service which manages the corresponding selected security elements (112, 116), in each case using a cryptographic key of the corresponding security management service, and an application-specific applet (114, 117) associated with the application (108) is installed in the corresponding selected security element (112, 116) by the server (240, 241) of the corresponding security management service over the corresponding channel, wherein the application (108) is cryptographically coupled to each of the installed applets (114, 117) to enable use of the application-specific cryptographic security functions for the application (108) which are provided by the corresponding applet (114, 117).

4. The method according to any one of the preceding claims, wherein the one or more security elements (112, 116) and security management services which manage the corresponding security elements (112, 116) are selected using a predefined set of combinations of security elements (112, 116) and associated security management services that are compatible with the application (108), which services have application-specific applets (114, 117) associated with the application (108) for installation in the corresponding security element (112, 116).

5. The method according to claim 4, wherein the selection of the one or more security elements (112, 116) and security management services further comprises:
• outputting the identified security elements (112, 116) and security management services which are compatible in accordance with the predefined set on a display device of the terminal device (100),
• receiving a user input with the selection via an input device of the terminal device (100), wherein the selection selects one or more security elements (112, 116) and security management services from the outputting security elements (112, 116) and security management services, and/or
wherein the set defines a rule of precedence for the combinations of compatible security elements (112, 116) and security management services and the selection is made taking into account the corresponding rule of precedence,
wherein the selection for example comprises at least the identified combination of a compatible security element (112, 116) and security management service with which the highest level of precedence in accordance with the rule of precedence is associated out of the identified combinations, and/or
wherein the selection compulsorily comprises at least two security elements (112, 116) which are managed by two different security management services, and/or at least two security elements (112, 116) which are managed by the same security management service.

6. The method according to any one of the preceding claims, wherein the cryptographic coupling comprises initial authentication of the installed applet (114, 117) by the application (108).

7. The method according to claim 6, wherein the method comprises generating an asymmetric key pair for the application (108), wherein the asymmetric key pair of the application (108) comprises a public cryptographic key and a private cryptographic key of the application (108).

8. The method according to claim 7, wherein the method further comprises providing a certificate (286) of the application (108), wherein the certificate (286) of the application (108) comprises the public cryptographic key of the application (108) and a unique identifier of the application (108),
wherein providing the certificate of the application (108) for example comprises:
• sending a certificate request from the application (108) over the network (150) to a management server (280) for managing the application (108), wherein the certificate request comprises the public cryptographic key of the application (108) and the unique identifier of the application (108),
• in response to the certificate request, receiving the certificate (286) of the application (108) from the certification server by means of the application (108).

9. The method according to any one of claims 7 to 8, wherein the cryptographic coupling of the application (108) to the installed applet (114, 117) comprises:
• sending a first coupling request from the application (108) to the security management program module (109, 111) of the selected security management service,
• sending a second coupling request from the security management program module (109, 111) receiving the first coupling request to the server (240, 241) of the selected security management service, over the network (150),
• establishing a second encrypted channel between the selected security element (112, 116) and the server (240, 241) of the selected security management service using the cryptographic key of the security management service,
• writing the public cryptographic key of the application (108) to a memory region, associated with the application-specific applet (114, 117), of the selected security element (112, 116) by means of the server (240, 241) of the selected security management service over the second encrypted channel.

10. The method according to claim 9, wherein the cryptographic coupling further comprises writing an initial asymmetric key pair of the application-specific applet (114, 117) to the memory region, associated with the application-specific applet (114, 117), of the selected security element (112, 116) by means of the server (240, 241) of the selected security management service over the second encrypted channel, wherein the initial asymmetric key pair of the applet (114, 117) comprises an initial public cryptographic key and an initial private cryptographic key, or
wherein the initialization of the cryptographic coupling further comprises generating the initial asymmetric key pair of the application-specific applet (114, 117) using the initial public cryptographic key and the initial private cryptographic key by means of the applet (114, 117).

11. The method according to claim 10, wherein the method further comprises receiving the initial public cryptographic key of the application-specific applet (114, 117) by means of the application (108) from the security management program module (109, 111).

12. The method according to any one of claims 6 to 11, wherein the initial authentication of the applet (114, 117) by the application (108) comprises:
• calculating a shared secret by means of the applet (114, 117) using the initial private cryptographic key of the applet (114, 117) and the public cryptographic key of the application (108),
• calculating the shared secret by means of the application (108) using the private cryptographic key of the application (108) and the initial public cryptographic key of the applet (114, 117),
• generating a random number by means of the applet (114, 117),
• generating a common authentication key to authenticate information as part of the communication between the application (108) and the applet (114, 117) by means of the applet (114, 117) using the shared secret and the generated random number,
• generating an authentication token by means of the applet (114, 117) using the authentication key and the public cryptographic key of the application (108) to authenticate the applet (114, 117) to the application (108),
• sending the random number together with the authentication token from the applet (114, 117) to the application (108),
• generating the common authentication key by means of the application (108) using the shared secret and the received random number,
• authenticating the received random number and the applet (114, 117) by verifying the received authentication token by means of the application (108) using the generated common authentication key and the public cryptographic key of the application (108),
wherein the cryptographic coupling for example further comprises generating a common symmetric cryptographic key by means of the applet (114, 117) and by means of the application (108) to encrypt the communication between the application (108) and the applet (114, 117) using the shared secret and the generated random number.

13. A mobile terminal device (100) comprising a processor (102), a communication interface (122) for communication over a network (150), and a plurality of security elements (112, 116), wherein the security elements (112, 116) can each be used to provide the application-specific cryptographic security functions for the mobile application (108) and are each managed by an external security management service,
wherein, for each of the external security management services of the plurality of security management services, a local security management program module (109, 111) is installed on the mobile terminal device (100),
wherein the processor (102) is configured to carry out a method for initializing application-specific cryptographic security functions for a mobile application (108) on a mobile terminal device (100), which comprises:
• installing the mobile application (108) on the mobile terminal device (100),
• identifying, by means of the installed application (108), the plurality of security elements (112, 116) which are available on the mobile terminal device (100) and can be used to provide the application-specific cryptographic security functions for the mobile application (108) and identifying the security management services which each manage the corresponding security elements (112, 116),
• selecting at least one security element (112, 116) from the identified plurality of security elements (112, 116) and the at least one security management service which manages the selected security element (112, 116),
• sending a first initialization request from the application (108) to the at least one security management program module (109, 111), installed on the mobile terminal device (100), of the selected security management service for the implementation of the application-specific cryptographic security functions for the application (108) in the selected security element (112, 116),
• sending a second initialization request from the security management program module (109, 111) receiving the first initialization request to a server (240, 241) of the selected security management service, over a network (150), for the implementation of the application-specific cryptographic security functions for the application (108) in the selected security element (112, 116),
• establishing a first encrypted channel between the selected security element (112, 116) and the server (240, 241) of the selected security management service using a cryptographic key of the security management service, wherein the cryptographic key of the security management service verifies that write access to the security element (112, 116) managed by the security management service is reserved for the security management service,
• installing an application-specific applet (114, 117) associated with the application (108) in the selected security element (112, 116) by means of the server (240, 241) of the selected security management service over the encrypted first channel, wherein the applet (114, 117) provides the application-specific cryptographic security functions for the application (108),
• cryptographically coupling the application (108) to the installed applet (114, 117) in order to enable use of the application-specific cryptographic security functions for the application (108) which are provided by the applet (114, 117).

14. A system (170) comprising a mobile terminal device (100) according to claim 13 and one or more servers (240, 241) of the one or more selected security management services for managing the selected one or more security elements (112, 116) of the mobile terminal device (100).

15. The system (170) according to claim 14, wherein the system (170) further comprises a management server (280) for managing the application (108).

## Revendications

1. Procédé d'initialisation de fonctions de sécurité cryptographique spécifiques d'une application pour une application mobile (108) sur un dispositif de terminal mobile (100), dans lequel le dispositif de terminal mobile (100) comprend une pluralité d'éléments de sécurité (112, 116) qui peuvent être utilisés pour fournir les fonctions de sécurité cryptographique spécifiques d'une application à l'application mobile (108) et sont chacun gérés par un service de gestion de sécurité externe,
dans lequel, pour chacun des services de gestion de sécurité externe de la pluralité de services de gestion de sécurité, un module de programme de gestion de sécurité locale (109, 111) est installé sur le dispositif de terminal mobile (100),
dans lequel le procédé comprend les étapes consistant à :
• installer l'application mobile (108) sur le dispositif de terminal mobile (100),
• identifier, au moyen de l'application installée (108), la pluralité d'éléments de sécurité (112, 116) qui sont disponibles sur le dispositif de terminal mobile (100) et peuvent être utilisés pour fournir les fonctions de sécurité cryptographique spécifiques d'une application à l'application mobile (108) et identifier les services de gestion de sécurité qui chacun gèrent les éléments de sécurité (112, 116) correspondants,
• sélectionner au moins un élément de sécurité (112, 116) à partir de la pluralité identifiée d'éléments de sécurité (112, 116) et de l'au moins un service de gestion de sécurité qui gère l'élément de sécurité (112, 116) sélectionné,
• envoyer une première requête d'initialisation depuis l'application (108) à l'au moins un module de programme de gestion de sécurité (109, 111), installé sur le dispositif de terminal mobile (100), du service de gestion de sécurité sélectionnée pour la mise en œuvre des fonctions de sécurité cryptographique spécifiques d'une application dans l'application (108) dans l'élément de sécurité (112, 116) sélectionné,
• envoyer une seconde requête d'initialisation depuis le module de programme de gestion de sécurité (109, 111) recevant la première requête d'initialisation à un serveur (240, 241) du service de gestion de sécurité sélectionné, sur un réseau (150), pour la mise en œuvre des fonctions de sécurité cryptographique spécifiques d'une application dans l'application (108) dans l'élément de sécurité (112, 116) sélectionné,
• établir un premier canal chiffré entre l'élément de sécurité (112, 116) sélectionné et le serveur (240, 241) du service de gestion de sécurité sélectionné en utilisant une clé cryptographique du service de gestion de sécurité, dans lequel la clé cryptographique du service de gestion de sécurité vérifie que l'accès en écriture à l'élément de sécurité (112, 116) géré par le service de gestion de sécurité est réservé au service de gestion de sécurité,
• installer une applet (114, 117) spécifique d'une application associée à l'application (108) dans l'élément de sécurité (112, 116) sélectionné au moyen du serveur (240, 241) du service de gestion de sécurité sélectionné sur le premier canal chiffré, dans lequel l'applet (114, 117) fournit les fonctions de sécurité cryptographique spécifiques d'une application à l'application (108),
• coupler de manière cryptographique l'application (108) à l'applet (114, 117) installée afin de permettre l'utilisation des fonctions de sécurité cryptographique spécifiques d'une application dans l'application (108), lesdites fonctions étant fournies par l'applet (114, 117).

2. Procédé selon la revendication 1, dans lequel une pluralité d'éléments de sécurité (112, 116) sont sélectionnés parmi la pluralité identifiée d'éléments de sécurité (112, 116) et les services de gestion de sécurité respectivement associés qui gèrent la pluralité d'éléments de sécurité (112, 116) sélectionnés,
dans lequel la pluralité d'éléments de sécurité (112, 116) sélectionnés sont chacun gérés par le même service de gestion de sécurité, par exemple, ou
dans lequel, par exemple, au moins certains de la pluralité d'éléments de sécurité sélectionnés sont gérés par des services de gestion de sécurité différents.

3. Procédé selon la revendication 2, dans lequel des premières requêtes d'initialisation pour tous les éléments de sécurité (112, 116) sélectionnés sont chacune envoyées par l'application (108) au module de programme de gestion de sécurité (109, 111) de chaque service de gestion de sécurité sélectionné pour la mise en œuvre des fonctions de sécurité cryptographique spécifiques d'une application dans l'application (108) dans l'élément de sécurité (112, 116) sélectionné respectif, dans lequel des secondes requêtes d'initialisation sont envoyées par les modules de programme de gestion de sécurité (109, 111) correspondants des services de gestion de sécurité sélectionnés sur un réseau (150) à des serveurs (240, 241) des services de gestion de sécurité sélectionnés, dans lequel un premier canal chiffré est défini entre chacun des éléments de sécurité (112, 116) sélectionnés et le serveur (240, 241) du service de gestion de sécurité respectif qui gère les éléments de sécurité (112, 116) sélectionnés correspondants, dans chaque cas en utilisant une clé cryptographique du service de gestion de sécurité correspondant, et une applet (114, 117) spécifique d'une application associée à l'application (108) est installée dans l'élément de sécurité (112, 116) sélectionné correspondant par le serveur (240, 241) du service de gestion de sécurité correspondant sur le canal correspondant, dans lequel l'application (108) est couplée de manière cryptographique à chacune des applets (114, 117) installées pour permettre l'utilisation des fonctions de sécurité cryptographique spécifiques d'une application dans l'application (108), lesdites fonctions étant fournies par l'applet (114, 117) correspondante.

4. Procédé selon l'une quelconque des revendications précédentes, dans lequel le ou les éléments de sécurité (112, 116) et les services de gestion de sécurité qui gèrent les éléments de sécurité (112, 116) correspondants sont sélectionnés en utilisant un ensemble prédéfini de combinaisons d'éléments de sécurité (112, 116) et de services de gestion de sécurité associés qui sont compatibles avec l'application (108), lesquels services ont des applets (114, 117) spécifiques d'une application associées à l'application (108) pour l'installation dans l'élément de sécurité (112, 116) correspondant.

5. Procédé selon la revendication 4, dans lequel la sélection du ou des éléments de sécurité (112, 116) et des services de gestion de sécurité comprend également les étapes consistant à :
• renvoyer les éléments de sécurité (112, 116) et services de gestion de sécurité identifiés qui sont compatibles conformément à l'ensemble prédéfini sur un dispositif d'affichage du dispositif de terminal (100),
• recevoir une entrée utilisateur avec la sélection par l'intermédiaire d'un dispositif d'entrée du dispositif de terminal (100), dans lequel la sélection sélectionne un ou plusieurs éléments de sécurité (112, 116) et services de gestion de sécurité à partir des éléments de sécurité (112, 116) et services de gestion de sécurité renvoyés, et/ou
dans lequel l'ensemble définit une règle de priorité pour les combinaisons d'éléments de sécurité (112, 116) et de services de gestion de sécurité compatibles et la sélection est effectuée en prenant en compte la règle de priorité correspondante,
dans lequel la sélection comprend par exemple au moins la combinaison identifiée d'un élément de sécurité (112, 116) et d'un service de gestion de sécurité compatibles auxquels le plus haut niveau de priorité conformément à la règle de priorité est associé parmi les combinaisons identifiées, et/ou
dans lequel la sélection comprend de manière obligatoire au moins deux éléments de sécurité (112, 116) qui sont gérés par deux services de gestion de sécurité différents, et/ou au moins deux éléments de sécurité (112, 116) qui sont gérés par le même service de gestion de sécurité.

6. Procédé selon l'une quelconque des revendications précédentes, dans lequel l'étape consistant à coupler de manière cryptographique comprend une authentification initiale de l'applet (114, 117) installée par l'application (108).

7. Procédé selon la revendication 6, dans lequel le procédé comprend une étape consistant à générer une paire de clés asymétriques pour l'application (108), dans lequel la paire de clés asymétriques de l'application (108) comprend une clé cryptographique publique et une clé cryptographique privée de l'application (108).

8. Procédé selon la revendication 7, dans lequel le procédé comprend en outre une étape consistant à fournir un certificat (286) de l'application (108), dans lequel le certificat (286) de l'application (108) comprend la clé cryptographique publique de l'application (108) et un identifiant unique de l'application (108),
dans lequel l'étape consistant à fournir le certificat de l'application (108) comprend par exemple les étapes consistant à :
• envoyer une requête de certificat depuis l'application (108) sur le réseau (150) à un serveur de gestion (280) pour gérer l'application (108), dans lequel la requête de certificat comprend la clé cryptographique publique de l'application (108) et l'identifiant unique de l'application (108),
• en réponse à la requête de certificat, recevoir le certificat (286) de l'application (108) à partir du serveur de certification au moyen de l'application (108).

9. Procédé selon l'une quelconque des revendications 7 à 8, dans lequel l'étape consistant à coupler de manière cryptographique l'application (108) à l'applet (114, 117) installée comprend les étapes consistant à :
• envoyer une première requête de couplage depuis l'application (108) au module de programme de gestion de sécurité (109, 111) du service de gestion de sécurité sélectionné,
• envoyer une seconde requête de couplage depuis le module de programme de gestion de sécurité (109, 111) recevant la première requête de couplage au serveur (240, 241) du service de gestion de sécurité sélectionné, sur le réseau (150),
• établir un second canal chiffré entre l'élément de sécurité (112, 116) sélectionné et le serveur (240, 241) du service de gestion de sécurité sélectionné en utilisant la clé cryptographique du service de gestion de sécurité,
• écrire la clé cryptographique publique de l'application (108) dans une région de mémoire, associée à l'applet (114, 117) spécifique d'une application, de l'élément de sécurité (112, 116) sélectionné au moyen du serveur (240, 241) du service de gestion de sécurité sélectionné sur le second canal chiffré.

10. Procédé selon la revendication 9, dans lequel l'étape consistant à coupler de manière cryptographique comprend en outre une étape consistant à écrire une paire de clés asymétriques initiale de l'applet (114, 117) spécifique d'une application dans la région de mémoire, associée à l'applet (114, 117) spécifique d'une application, de l'élément de sécurité (112, 116) sélectionné au moyen du serveur (240, 241) du service de gestion de sécurité sélectionné sur le second canal chiffré, dans lequel la paire de clés asymétriques initiales de l'applet (114, 117) comprend une clé cryptographique publique initiale et une clé cryptographique privée initiale, ou
dans lequel l'initialisation de l'étape consistant à coupler de manière cryptographique comprend en outre une étape consistant à générer la paire de clés asymétriques initiales de l'applet (114, 117) spécifique d'une application en utilisant la clé cryptographique publique initiale et la clé cryptographique privée initiale au moyen de l'applet (114, 117).

11. Procédé selon la revendication 10, dans lequel le procédé comprend en outre une étape consistant à recevoir la clé cryptographique publique initiale de l'applet (114, 117) spécifique d'une application au moyen de l'application (108) depuis le module de programme de gestion de sécurité (109, 111).

12. Procédé selon l'une quelconque des revendications 6 à 11, dans lequel l'authentification initiale de l'applet (114, 117) par l'application (108) comprend les étapes consistant à :
• calculer un secret partagé au moyen de l'applet (114, 117) en utilisant la clé cryptographique privée initiale de l'applet (114, 117) et la clé cryptographique publique de l'application (108),
• calculer le secret partagé au moyen de l'application (108) en utilisant la clé cryptographique privée de l'application (108) et la clé cryptographique publique initiale de l'applet (114, 117),
• générer un nombre aléatoire au moyen de l'applet (114, 117),
• générer une clé d'authentification commune pour authentifier des informations en tant que partie de la communication entre l'application (108) et l'applet (114, 117) au moyen de l'applet (114, 117) en utilisant le secret partagé et le nombre aléatoire généré,
• générer un jeton d'authentification au moyen de l'applet (114, 117) en utilisant la clé d'authentification et la clé cryptographique publique de l'application (108) afin d'authentifier l'applet (114, 117) vis-à-vis de l'application (108),
• envoyer le nombre aléatoire conjointement avec le jeton d'authentification depuis l'applet (114, 117) à l'application (108),
• générer la clé d'authentification commune au moyen de l'application (108) en utilisant le secret partagé et le nombre aléatoire reçu,
• authentifier le nombre aléatoire reçu et l'applet (114, 117) en vérifiant le jeton d'authentification reçu au moyen de l'application (108) en utilisant la clé d'authentification commune générée et la clé cryptographique publique de l'application (108),
dans lequel l'étape consistant à coupler de manière cryptographique comprend en outre par exemple une étape consistant à générer une clé cryptographique symétrique commune au moyen de l'applet (114, 117) et au moyen de l'application (108) pour chiffrer la communication entre l'application (108) et l'applet (114, 117) en utilisant le secret partagé et le nombre aléatoire généré.

13. Dispositif de terminal mobile (100) comprenant un processeur (102), une interface de communication (122) pour une communication sur un réseau (150), et une pluralité d'éléments de sécurité (112, 116), dans lequel les éléments de sécurité (112, 116) peuvent chacun être utilisés pour fournir les fonctions de sécurité cryptographique spécifiques d'une application à l'application mobile (108) et sont chacun gérés par un service de gestion de sécurité externe,
dans lequel, pour chacun des services de gestion de sécurité externe de la pluralité de services de gestion de sécurité, un module de programme de gestion de sécurité locale (109, 111) est installé sur le dispositif de terminal mobile (100),
dans lequel le processeur (102) est configuré pour mettre en œuvre un procédé d'initialisation de fonctions de sécurité cryptographique spécifiques d'une application pour une application mobile (108) sur un dispositif de terminal mobile (100), qui comprend les étapes consistant à :
• installer l'application mobile (108) sur le dispositif de terminal mobile (100),
• identifier, au moyen de l'application installée (108), la pluralité d'éléments de sécurité (112, 116) qui sont disponibles sur le dispositif de terminal mobile (100) et peuvent être utilisés pour fournir les fonctions de sécurité cryptographique spécifiques d'une application à l'application mobile (108) et identifier les services de gestion de sécurité qui chacun gèrent les éléments de sécurité (112, 116) correspondants,
• sélectionner au moins un élément de sécurité (112, 116) à partir de la pluralité identifiée d'éléments de sécurité (112, 116) et de l'au moins un service de gestion de sécurité qui gère l'élément de sécurité (112, 116) sélectionné,
• envoyer une première requête d'initialisation depuis l'application (108) à l'au moins un module de programme de gestion de sécurité (109, 111), installé sur le dispositif de terminal mobile (100), du service de gestion de sécurité sélectionnée pour la mise en œuvre des fonctions de sécurité cryptographique spécifiques d'une application dans l'application (108) dans l'élément de sécurité (112, 116) sélectionné,
• envoyer une seconde requête d'initialisation depuis le module de programme de gestion de sécurité (109, 111) recevant la première requête d'initialisation à un serveur (240, 241) du service de gestion de sécurité sélectionné, sur un réseau (150), pour la mise en œuvre des fonctions de sécurité cryptographique spécifiques d'une application dans l'application (108) dans l'élément de sécurité (112, 116) sélectionné,
• établir un premier canal chiffré entre l'élément de sécurité (112, 116) sélectionné et le serveur (240, 241) du service de gestion de sécurité sélectionné en utilisant une clé cryptographique du service de gestion de sécurité, dans lequel la clé cryptographique du service de gestion de sécurité vérifie que l'accès en écriture à l'élément de sécurité (112, 116) géré par le service de gestion de sécurité est réservé au service de gestion de sécurité,
• installer une applet (114, 117) spécifique d'une application associée à l'application (108) dans l'élément de sécurité (112, 116) sélectionné au moyen du serveur (240, 241) du service de gestion de sécurité sélectionné sur le premier canal chiffré, dans lequel l'applet (114, 117) fournit les fonctions de sécurité cryptographique spécifiques d'une application à l'application (108),
• coupler de manière cryptographique l'application (108) à l'applet (114, 117) installée afin de permettre l'utilisation des fonctions de sécurité cryptographique spécifiques d'une application dans l'application (108), lesdites fonctions étant fournies par l'applet (114, 117).

14. Système (170) comprenant un dispositif de terminal mobile (100) selon la revendication 13 et un ou plusieurs serveurs (240, 241) du ou des services de gestion de sécurité sélectionnés pour gérer le ou les éléments de sécurité (112, 116) sélectionnés du dispositif de terminal mobile (100).

15. Système (170) selon la revendication 14, dans lequel le système (170) comprend en outre un serveur de gestion (280) destiné à gérer l'application (108).
